# EUROPEAN PATENT APPLICATION

(11) **EP 4 318 243 A1**
(43) Date of publication of application: **07.02.2024**
(21) Application number: 22794201.8
(22) Date of filing: 17.01.2022
(51) Int. Cl.: G06F 11/14, G06F 11/20

(54) **DATA BACKUP METHOD AND SYSTEM, AND RELATED DEVICE**

(30) Priority: 26.04.2021 CN 202110454477; 20.08.2021 CN 202110961109
(71) Applicant: Huawei Cloud Computing Technologies Co., Ltd., Guizhou 550025 (CN)
(72) Inventor: HUANG, Shuang, Shenzhen, Guangdong 518129 (CN); BATTULA, Brahma Reddy, Shenzhen, Guangdong 518129 (CN); CHEN, Qi, Shenzhen, Guangdong 518129 (CN)
(74) Representative: Goddar, Heinz J.
(86) International application number: PCT/CN2022/072427
(87) International publication number: WO 2022/227719

(57) **Abstract**

This application provides a data backup method. The method is applied to a data backup system including a primary cluster, a secondary cluster, and a control device. The control device controls, based on a first data backup policy, the primary cluster or the secondary cluster to back up, to the secondary cluster, a plurality of data sets related to a first service that are in the primary cluster and that are at a first moment, where the first data backup policy includes information about the plurality of data sets related to the first service and the first moment. In this way, data may be backed up between the primary cluster and the secondary cluster at a granularity of a service, so that the plurality of data sets related to the first service that are backed up to the secondary cluster may be consistent in a time dimension, and the secondary cluster may restore service running based on service data in a same time period when the primary cluster is faulty. This may improve quality of a business service provided in the data backup system. In addition, this application further provides a corresponding data backup system and a related device.

## Description

### TECHNICAL FIELD

This application relates to the field of big data technologies, and in particular, to a data backup method and system, and a related device.

### BACKGROUND

With development of big data technologies, more users (such as enterprises) migrate service data to a big data platform for storage. Accordingly, the user attaches more importance to a disaster recovery capability of the big data platform. In other words, the big data platform is expected to ensure that the service data stored on the big data platform is not lost when a disaster such as a device fault occurs.

Currently, the big data platform implements disaster recovery for the service data of the user through a data backup system. The data backup system includes a primary cluster and a secondary cluster. The primary cluster may process the service data of the user by using a component, for example, encapsulate and store the service data of the user by using the component. Different components may process different types of service data of a same user. For example, the primary cluster may store service data such as audio, video, and image of the user by using a component 1, and store service data of the user in a form of a table by using a component 2. Generally, the primary cluster may periodically back up service data processed by each component to a secondary site, so that a secondary cluster may continue to provide a business service for the user based on the backed up service data after the primary cluster is faulty. Therefore, after a disaster recovery switchover, how to avoid, as much as possible, that the service data backed up to the secondary cluster affects quality of the provided business service becomes an urgent problem to be resolved currently.

### SUMMARY

In view of this, embodiments of this application provide a data backup method. In the method, during data backup, data is backed up at a granularity of a service, to avoid a business service error caused by data backup inconsistency, and ensure that service data backed up to a secondary cluster does not affect quality of a provided business service. This application further provides a corresponding data backup system, a control device, a computing device, a computer-readable storage medium, and a computer program product.

According to a first aspect, embodiments of this application provide a data backup method. The method is applied to a data backup system including a primary cluster, a secondary cluster, and a control device. During specific implementation, the control device controls, based on a first data backup policy, the primary cluster or the secondary cluster to back up, to the secondary cluster, a plurality of data sets related to a first service that are in the primary cluster and that are at a first moment, where the first data backup policy includes information about the plurality of data sets related to the first service and the first moment.

In this way, data may be backed up between the primary cluster and the secondary cluster at a granularity of a service, so that the plurality of data sets related to the first service that are backed up to the secondary cluster may be consistent in a time dimension. In this way, when the primary cluster is faulty, the secondary cluster may restore service running based on service data in a same time period, to avoid a problem that an error occurs when the data backup system provides a business service because the service data backed up to the secondary cluster is inconsistent in a time dimension. This may improve reliability of storing the service data for a user by the data backup system, and improve business service quality.

In a possible implementation, when the control device controls, based on a first data backup policy, the primary cluster or the secondary cluster to back up, to the secondary cluster, a plurality of data sets related to a first service that are in the primary cluster and that are at a first moment. Specifically, the control device may send a first instruction to the primary cluster, to instruct the primary cluster to send, to the secondary cluster, data corresponding to snapshots of the plurality of data sets related to the first service that are at the first moment. Alternatively, the control device sends a second instruction to the secondary cluster, to instruct the secondary cluster to replicate, from the primary cluster, data corresponding to snapshots of the plurality of data sets related to the first service that are at the first moment and that are in the primary cluster. In this way, the control device may control, by sending an instruction to the primary cluster or the secondary cluster, the primary cluster or the secondary cluster to implement a data backup process based on the snapshots.

In a possible implementation, before sending a first instruction to the primary cluster or sending a second instruction to the secondary cluster, the control device may first send a third instruction to the primary cluster, where the third instruction includes the information about the plurality of data sets related to the first service and the first moment, and the third instruction instructs the primary cluster to obtain the snapshots of the plurality of data sets related to the first service that are at the first moment. In this way, the primary cluster or the secondary cluster may subsequently back up, to the secondary cluster based on the snapshot corresponding to the first moment, the plurality of data sets related to the first service that are in the primary cluster, and the plurality of data sets that are backed up to the secondary cluster are all the plurality of data sets related to the first service that are in the primary cluster and that are at the first moment. In a manner of taking snapshots of the plurality of data sets related to the first service that are at the first moment, the data set at the first moment may be obtained and backed up more accurately, to avoid a problem of inconsistent data backup time caused by a communication delay.

In a possible implementation, the control device may further send a fourth instruction to the primary cluster, where the fourth instruction instructs the primary cluster to synchronize user data to the secondary cluster; or the control device may obtain user data stored in the primary cluster and the secondary cluster, and adjust, based on the user data stored in the primary cluster, the user data stored in the secondary cluster, so that the user data stored in the primary cluster is consistent with the user data stored in the secondary cluster. In this way, when the secondary cluster takes over a service on the primary cluster, the secondary cluster may provide a corresponding business service for a user based on the user data backed up to the secondary cluster, so that operation and maintenance personnel do not need to manually configure the user data on the secondary cluster. In this way, not only operation and maintenance costs of the operation and maintenance personnel may be reduced, but also a recovery time objective of the data backup system may be effectively reduced.

For example, the user data may be, for example, at least one of a user identifier, user permission, or a tenant identifier, or may be other user-related data.

In a possible implementation, the control device may not only configure a first data backup policy for a first service, but also configure a second data backup policy for a second service, where the second data backup policy includes information about a plurality of data sets related to the second service and a second moment; and then, the control device controls, based on the second data backup policy, the primary cluster or the secondary cluster to back up, to the secondary cluster, the plurality of data sets related to the second service that are in the primary cluster and that are at the second moment. The second service and the first service belong to different services, and may be specifically different services belonging to a same user, or may be different services belonging to different users, or the like. In this way, the data backup system may implement data backup based on a service granularity for a plurality of different services, to support high-quality services of the plurality of services.

In a possible implementation, the plurality of data sets related to the first service include a data set processed or stored by a first component in the primary cluster and a data set processed or stored by a second component in the primary cluster. For example, the first component and the second component may be configured to be encapsulated into different formats, or the first component and the second component have different data processing performance. In this way, different data sets that belong to a same service and that are processed or stored by different components in the primary cluster at the first moment may be backed up to the secondary cluster.

In addition, the plurality of data sets related to the second service that are backed up to the secondary cluster in the data backup system may include a data set processed or stored by a first component in the primary cluster, a data set processed or stored by a second component in the primary cluster, a data set stored or processed by a third component in the primary cluster, and the like. Components that process or store data sets of different services may be different.

In a possible implementation, the control device includes a primary client and a secondary client. The primary client is configured to detect first status information of the primary cluster, and the secondary client is configured to detect second status information of the secondary cluster. In this case, the control device may further obtain the first status information obtained through detection of the primary client and the second status information obtained through detection of the secondary client. In addition, when the first status information indicates that the primary cluster is a secondary identity or the cluster fails (for example, the primary cluster fails due to a fault), and when the second status information indicates that the secondary cluster is a primary identity, the control device determines that the secondary client is a client accessed by an application. In this way, when the primary/secondary identity of the primary cluster and the primary/secondary identity of the secondary cluster are reversed, the control device may automatically switch the client accessing the cluster, so that the operation and maintenance personnel do not need to perform manual switching.

For example, before the primary cluster is faulty, the first status information obtained by the control device may indicate that the primary cluster is the primary identity, and the second status information obtained by the control device may indicate that the secondary cluster is the secondary identity.

In a possible implementation, the control device may further prompt the user with information indicating that the primary cluster is faulty, so that the user determines, based on the prompt, that the primary cluster is faulty, and the control device may adjust the identity of the secondary cluster from the secondary identity to the primary identity in response to an identity adjustment operation performed by the user for the secondary cluster. In this way, identity reversal is performed by adjusting the primary cluster and the secondary cluster through a manual operation, so that abnormal switching of the primary/secondary identity of the primary cluster and the primary/secondary identity of the secondary cluster that is caused by a program running error in the data backup system may be avoided as much as possible.

In a possible implementation, the control device and the primary cluster are deployed in an isolated manner. For example, the control device and the secondary cluster may be jointly deployed at a secondary site, and the primary cluster is deployed at a primary site. Because the control device and the primary cluster are deployed in an isolated manner, when the primary cluster is faulty, the control device is not faulty, and the primary cluster may be switched to the control device when a fault occurs.

In a possible implementation, a same clock source is set in the control device, the primary cluster, and the secondary cluster. In this way, a moment at which the control device controls the primary cluster or the secondary cluster to perform data backup is consistent with a moment at which the primary cluster or the secondary cluster actually performs backup, to avoid a data backup error caused by inconsistent clock sources. Time consistency of data backup is improved.

In a possible implementation, the primary cluster and/or the secondary cluster include/includes a cluster constructed based on a hadoop architecture.

According to a second aspect, this application provides a data backup method. The method is applied to a data backup system, and the data backup system includes a primary cluster, a secondary cluster, and a control device. During specific implementation, the primary cluster obtains an instruction delivered by the control device, where the instruction summary includes information about a plurality of data sets related to a first service and a first moment, so that the primary cluster backs up, to the secondary cluster based on the instruction, the plurality of data sets related to the first service that are in the primary cluster and that are at the first moment. In this way, data may be backed up between the primary cluster and the secondary cluster at a granularity of a service, so that the plurality of data sets related to the first service that are backed up to the secondary cluster may be consistent in a time dimension.

In a possible implementation, when the primary cluster backs up, to the secondary cluster based on the instruction, the plurality of data sets related to the first service that are in the primary cluster and that are at the first moment, and specifically, may obtain, based on the information about the plurality of data sets related to the first service and the first moment, snapshots of the plurality of data sets related to the first service that are at the first moment and that are in the primary cluster. The primary cluster sends, data (namely, the plurality of data sets related to the first service) corresponding to the snapshots to the secondary cluster based on the snapshots, and backs up the plurality of data sets related to the first service that are in the primary cluster and that are at the first moment to the secondary cluster.

In a possible implementation, the primary cluster may further back up the user data to the secondary cluster. In this way, when the secondary cluster takes over a service on the primary cluster, the secondary cluster may provide a corresponding business service for a user based on the user data backed up to the secondary cluster, so that operation and maintenance personnel do not need to manually configure the user data on the secondary cluster. In this way, not only operation and maintenance costs of the operation and maintenance personnel may be reduced, but also a recovery time objective of the data backup system may be effectively reduced.

For example, the user data may be, for example, at least one of a user identifier, user permission, or a tenant identifier, or may be other user-related data.

In a possible implementation, the primary cluster and/or the secondary cluster include/includes a cluster constructed based on a hadoop architecture.

According to a third aspect, this application provides a control device, where the control device is located in a data backup system, the data backup system further includes a primary cluster and a secondary cluster, and the control device includes: a control module, configured to control, based on a first data backup policy, the primary cluster or the secondary cluster to back up, to the secondary cluster, a plurality of data sets related to a first service that are in the primary cluster and that are at a first moment, where the first data backup policy includes information about the plurality of data sets related to the first service and the first moment.

In a possible implementation, the control module is specifically configured to: send a first instruction to the primary cluster, to instruct the primary cluster to send, to the secondary cluster, data corresponding to snapshots of the plurality of data sets related to the first service that are at the first moment, or send a second instruction to the secondary cluster, to instruct the secondary cluster to replicate, from the primary cluster, data corresponding to snapshots of the plurality of data sets related to the first service that are at the first moment and that are in the primary cluster.

In a possible implementation, the control device further includes: a communication module, configured to: before the control device sends a first instruction to the primary cluster or the control device sends a second instruction to the secondary cluster, send a third instruction to the primary cluster, where the third instruction includes the information about the plurality of data sets related to the first service and the first moment, and the third instruction instructs the primary cluster to obtain the snapshots of the plurality of data sets related to the first service that are at the first moment.

In a possible implementation, the control device further includes: a communication module, configured to send a fourth instruction to the primary cluster, where the fourth instruction instructs the primary cluster to synchronize user data to the secondary cluster; or the control module, further configured to: obtain, user data stored in the primary cluster and the secondary cluster, and adjust, based on the user data stored in the primary cluster, the user data stored in the secondary cluster.

In a possible implementation, the control device further includes a configuration module, configured to configure the first data backup policy for the first service based on the information that is about the plurality of data sets related to the first service and that is entered by a user and the first moment.

In a possible implementation, the control device further includes a configuration module, configured to configure a second data backup policy for a second service, where the second data backup policy includes information about a plurality of data sets related to the second service and a second moment; and the control module is further configured to control, based on the second data backup policy, the primary cluster or the secondary cluster to back up, to the secondary cluster, the plurality of data sets related to the second service that are in the primary cluster and that are at the second moment.

In a possible implementation, the plurality of data sets related to the first service include a data set processed or stored by a first component in the primary cluster and a data set processed or stored by a second component in the primary cluster.

In a possible implementation, the control device includes a primary client and a secondary client, the primary client is configured to detect first status information of the primary cluster, the secondary client is configured to detect second status information of the secondary cluster, and the control device further includes: a communication module, configured to obtain the first status information obtained through detection of the primary client and the second status information obtained through detection of the secondary client; and a determining module, configured to: when the first status information indicates that the primary cluster is a secondary identity or the cluster fails, and the second status information indicates that the secondary cluster is a primary identity, determine that the secondary client is a client accessed by an application.

In a possible implementation, the control device further includes a prompting module and an adjustment module, where the prompting module is configured to prompt the user with information indicating that the primary cluster is faulty; and the adjustment module is configured to adjust an identity of the secondary cluster from the secondary identity to the primary identity in response to an identity adjustment operation of the user for the secondary cluster.

In a possible implementation, the control device is deployed in an isolated manner from the primary cluster.

In a possible implementation, a same clock source is set in the control device, the primary cluster, and the secondary cluster.

In a possible implementation, the primary cluster and/or the secondary cluster include/includes a cluster constructed based on a hadoop architecture.

According to a fourth aspect, this application provides a primary cluster, where the primary cluster is located in a data backup system, the data backup system further includes a secondary cluster and a control device, and the primary cluster includes: a communication module, configured to obtain an instruction delivered by the control device, where the instruction includes information about a plurality of data sets related to a first service and a first moment; and a backup module, configured to back up to the secondary cluster based on the instruction, the plurality of data sets related to the first service that are in the primary cluster and that are at the first moment.

In a possible implementation, the backup module is specifically configured to: obtain, based on the information about the plurality of data sets related to the first service and the first moment, snapshots of the plurality of data sets related to the first service that are in the primary cluster and that are at the first moment; and send data corresponding to the snapshots to the secondary cluster based on the snapshots.

In a possible implementation, the backup module is further configured to synchronize the user data to the secondary cluster.

In a possible implementation, the primary cluster and/or the secondary cluster include/includes a cluster constructed based on a hadoop architecture.

According to a fifth aspect, this application provides a data backup system. The data backup system includes a control device, a primary cluster, and a secondary cluster. The control device is configured to perform the data backup method according to the first aspect or any implementation of the first aspect, the primary cluster is configured to perform the data backup method according to the second aspect or any implementation of the second aspect, and the secondary cluster is configured to obtain and store a data set backed up from the primary cluster.

According to a sixth aspect, this application provides a control device, where the control device includes a processor and a memory. The processor is configured to execute instructions stored in the memory, and the control device is enabled to perform the data backup method according to the first aspect or any implementation of the first aspect.

According to a seventh aspect, this application provides a primary cluster, where the primary cluster includes at least one processor and at least one memory, and the at least one processor executes instructions stored in the at least one memory, to enable the primary cluster to perform the data backup method according to the second aspect or any implementation of the second aspect.

According to an eighth aspect, this application provides a computer-readable storage medium, where the computer-readable storage medium stores instructions; and when the instructions run on a computing device, the computing device is enabled to perform the data backup method according to the first aspect or any implementation of the first aspect.

According to a ninth aspect, this application provides a computer-readable storage medium, where the computer-readable storage medium stores instructions; and when the instructions run on at least one computing device, the at least one computing device is enabled to perform the data backup method according to the second aspect or any implementation of the second aspect.

According to a tenth aspect, this application provides a computer program product including instructions. When the computer program product runs on a computing device, the computing device is enabled to perform the data backup method according to the first aspect or any implementation of the first aspect.

According to an eleventh aspect, this application provides a computer program product including instructions. When the computer program product runs on at least one computing device, the at least one computing device is enabled to perform the data backup method according to the second aspect or any implementation of the second aspect.

Based on the implementations provided in the foregoing aspects, this application may be further combined to provide more implementations.

### BRIEF DESCRIPTION OF DRAWINGS

To describe technical solutions in embodiments of this application more clearly, the following briefly introduces accompanying drawings used for describing the embodiments. It is clear that the accompanying drawings in the following description show merely some embodiments of this application, and a person of ordinary skill in the art may still derive other drawings from these accompanying drawings.
FIG. 1 is a schematic diagram of an architecture of a data backup system 100;
FIG. 2 is a schematic diagram of backing up service data in a data backup system 100;
FIG. 3 is a schematic diagram of an architecture of a data backup system 300 according to an embodiment of this application;
FIG. 4 is a schematic diagram of backing up service data in a data backup system 300 according to an embodiment of this application;
FIG. 5 is a schematic diagram of an architecture of a data backup system 300 according to an embodiment of this application;
FIG. 6 is a schematic diagram of a cluster pairing interface according to an embodiment of this application;
FIG. 7 is a schematic diagram of a policy configuration interface according to an embodiment of this application;
FIG. 8 is a schematic diagram of backing up data sets of different services in a data backup system 300 according to an embodiment of this application;
FIG. 9 is a schematic flowchart of a data backup method according to an embodiment of this application;
FIG. 10 is a schematic flowchart of another data backup method according to an embodiment of this application;
FIG. 11 is a schematic diagram of a structure of a control device according to an embodiment of this application;
FIG. 12 is a schematic diagram of a structure of a primary cluster according to an embodiment of this application;
FIG. 13 is a schematic diagram of a hardware structure of a control device according to an embodiment of this application; and
FIG. 14 is a schematic diagram of a hardware structure of a primary cluster according to an embodiment of this application.

### DESCRIPTION OF EMBODIMENTS

The following describes the solutions in embodiments provided in this application with reference to the accompanying drawings in this application.

In the specification, claims, and the accompanying drawings of this application, the terms "first", "second", and so on are intended to distinguish between similar objects but do not necessarily indicate a specific order or sequence. It should be understood that the terms used in such a way are interchangeable in proper circumstances, and this is merely a distinguishing manner used to describe objects with a same attribute in embodiments of this application.

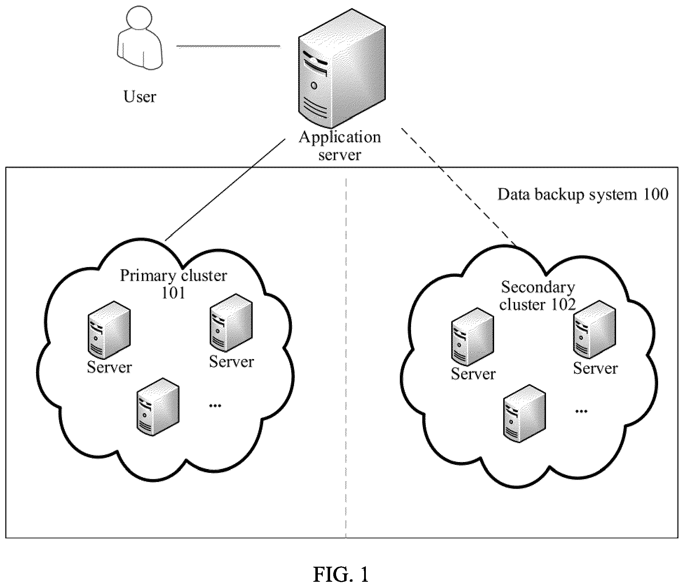

FIG. 1 is a schematic diagram of an architecture of an example data backup system. As shown in FIG. 1, the data backup system 100 includes a primary cluster 101 and a secondary cluster 102. The primary cluster 101 and the secondary cluster 102 may be implemented as at least one device (such as a server, a virtual machine, a container, a storage device, or the like). For example, both the primary cluster 101 and the secondary cluster 102 may be implemented as a cluster including a plurality of servers (for example, a cluster constructed based on a hadoop architecture, or the like). In some scenarios, the primary cluster 101 and the secondary cluster 102 may also be separately implemented as a single device.

In an actual application scenario, a user may access the primary cluster 101 through an application server (which may be specifically a client in the application server). The access includes reading and writing data related to one or more services of the user, and the like. For brevity of description, data related to a service is referred to as service data below. In addition, the primary cluster 101 may periodically back up, to the secondary cluster 102, the service data stored by the user in the primary cluster 101. In this way, when the primary cluster 101 is faulty, the secondary cluster 102 may continue to provide a corresponding business service for a user 104 by using the backed up service data, to improve reliability of storing the service data for the user 104 by the data backup system 100.

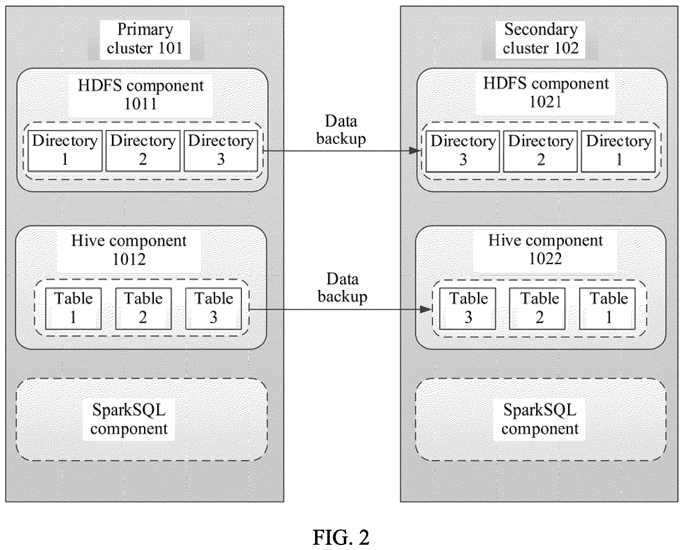

For example, it is assumed that the primary cluster 101 and the secondary cluster 102 are constructed based on a hadoop architecture, the primary cluster 101 may include a hadoop distributed file system (hadoop distributed file system, HDFS) component 1011 and a Hive component 1012, as shown in FIG. 2. The HDFS component is used to store files. Each file is stored as a series of data blocks, may provide high-throughput data access, and is applicable to large-scale data sets; and the Hive component is used to extract, convert, and load data, so that the data may be stored and queried in the cluster constructed based on the hadoop architecture. Specifically, when storing service data of a plurality of users, the primary cluster 101 may store the service data of each user in different formats by using a plurality of components. The HDFS component 1011 is configured to encapsulate service data such as audio, video, and an image of the user into a format of a file and store the service data in the primary cluster 101, and the service data in the format of the file is stored in a corresponding directory. For example, the service data that belongs to the user 106 and that is stored in the primary cluster 101 through the HDFS component 1011 is located in a directory 3 (service data in a directory 1 and a target 2 may be service data of another user). The Hive component 1012 is configured to encapsulate the service data of the user into structured data, and store the service data in the primary cluster 101 in a form of a table. For example, the service data that belongs to the user 106 and that is stored in the primary cluster 101 through the Hive component 1012 is a table 3 (service data in a table 1 and a table 2 may be the service data of the another user). Correspondingly, the secondary cluster 102 may include an HDFS component 1021 and a Hive component 1022. Functions of components on the secondary cluster 102 are similar to functions of components on the primary cluster 101, and details are not described herein again. When the primary cluster 101 backs up the service data on the primary cluster 101 to the secondary cluster 102, in a conventional technology, during backup, a replication task 1 and a replication task 2 are separately started, and these replication tasks are performed by creating corresponding processes. The replication task 1 is used to back up data (including a directory 1, a directory 2, and a directory 3) related to the HDFS component 1011 to a storage area corresponding to the HDFS component 1021. The replication task 2 is used to back up data (including a table 1, a table 2, and a table 3) related to the Hive component 1012 to a storage area corresponding to the Hive component 1022.

However, the data backup that uses the component as a granularity generally only ensures that service data on a single component between the primary cluster 101 and the secondary cluster 102 is inconsistent, and data in a plurality of components backed up to the secondary cluster 102 may be inconsistent in a time dimension. Specifically, in a process of backing up the service data, because a process of backing up the service data related to the HDFS component 1011 and a process of backing up the service data related to the Hive component 1012 are independent of each other, the replication task 1 and the replication task 2 may start to perform a data backup process at different moments, so that the service data finally backed up to the storage area corresponding to the HDFS component 1021 and the service data finally backed up to the storage area corresponding to the Hive component 1022 may be the service data of the user 104 that is stored in the primary cluster 101 and that is at different time points. Therefore, after the disaster recovery switchover, the secondary cluster 102 provides a business service for the user based on the service data at different time points, which may cause an error in the business service provided by the secondary cluster 102. In this embodiment, data related to the component (for example, the HDFS component 1011 and the Hive component 1022) may be, for example, data on which processing such as encapsulation is performed through the component, or data that is stored through the component.

For example, when the replication task 1 is performed at a moment 13:00:00, and the replication task 2 is performed at a moment 13:01:00, the service data that is finally backed up to the storage area corresponding to the HDFS component 1021 in the secondary cluster 102 is service data of a plurality of users (including the user 104) before 13:00:00, and the service data that is finally backed up to the storage area corresponding to the Hive component 1022 is service data of a plurality of users (including the user 104) before 13:01:00. Therefore, if the primary cluster 101 stores, through the HDFS component 1011 and the Hive component 1012, new service data belonging to the user 104 during a period from 13:00:00 to 13:01:00 (for example, the primary cluster 101 modifies some stored service data), the service data backed up to the HDFS component 1021 lacks the new data in the period from 13:00:00 to 13:01:00. In this way, when the primary cluster 101 is faulty, and when the user 104 accesses, through a client 103, the service data backed up in the secondary cluster 102, the user 104 may obtain the latest and correct service data by accessing the Hive component 1022, but some service data obtained by accessing the HDFS component 1021 may be incorrect (which is old data before modification). Consequently, an error may occur when the data backup system 100 provides a service such as data storage for the user 104. For example, when the data backup system 100 stores data of a bill clearing service, the user 104 may need to access bill details data in the directory 3 and a customer list in the table 3, and compare the bill details data in the directory 3 and the customer list in the table 3 based on a time dimension, to determine a bill corresponding to each customer. In this case, if the customer list and the bill details data belong to data in different time periods, there may be errors such as some bills that have been settled by customers may be considered as unsettled, or some bills in the bill details data do not belong to any customer in the customer list. Consequently, reliability of the service data stored in the data backup system 100 is reduced. In other words, quality of a data storage service provided in the data backup system 100 is reduced.

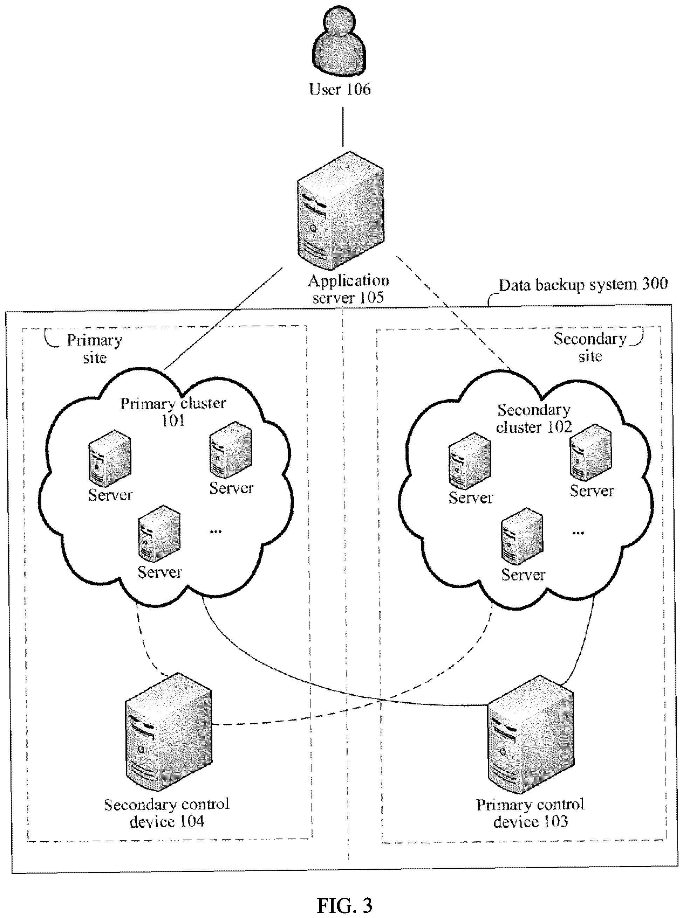

Based on this, embodiments of this application provide a data backup system. FIG. 3 is a schematic diagram of an architecture of a data backup system according to an embodiment of this application. As shown in FIG. 3, based on the data backup system 100 shown in FIG. 1, the data backup system 300 shown in FIG. 3 includes a primary cluster 101, a secondary cluster 102, a primary control device 103, and a secondary control device 104. In addition, the data backup system 300 may be connected to an application server 105. The primary cluster 101 and the secondary cluster 102 may be implemented as at least one device (such as a server, a virtual machine, a container, a storage device, or the like). For example, both the primary cluster 101 and the secondary cluster 102 may be implemented as a cluster including a plurality of servers (for example, a cluster based on a hadoop architecture, or the like). In some scenarios, the primary cluster 101 and the secondary cluster 102 may also be separately implemented as a single device. The primary cluster 101 is configured to provide data storage and processing for an application 1 and an application 2 that are deployed in the application server 105, and enable the application server 105 to read and write data. In FIG. 3, an example in which the application server 105 includes two applications is used. In actual application, the application server 105 may include any quantity of applications. The secondary cluster 102 is used as a backup cluster of the primary cluster 101, and is configured to back up data in the primary cluster 101. After the disaster recovery switchover occurs, the secondary cluster 102 supports data reading and writing of the application server 105.

The primary control device 103 and the secondary control device 104 shown in FIG. 3 are configured to control data backup between the primary cluster 101 and the secondary cluster 102. Specifically, before the primary cluster 101 is faulty, the primary control device 103 controls data backup between the primary cluster 101 and the secondary cluster 102. After the primary cluster 101 is faulty, the secondary control device 104 controls data backup between the secondary cluster 102 and the primary cluster 101 (or another cluster that is used as redundancy backup of the secondary cluster 102) after the fault is rectified. For example, the primary control device 103 and the secondary control device 104 may be specifically servers, virtual machines, containers, or the like. FIG. 3 shows that the primary control device 103 and the secondary cluster 102 are jointly deployed at a secondary site; and the secondary control device 104 and the primary cluster 101 are jointly deployed at a primary site. The primary site and the secondary site may be device clusters in two independent regions (region), equipment rooms, or two different local area networks. Generally, the primary site and the secondary site further have independent ventilation, fire, water, and power control systems. A deployment manner of the primary control device 103 and the secondary control device 104 shown in FIG. 3 is merely an example. In addition, FIG. 3 is described by using an example in which the application server 105 is deployed outside the data backup system 300. In another possible implementation, the application server 105 may also be deployed in the data backup system 300. In this case, when the primary control device 103, the secondary control device 104, and the application server 105 are virtual machines or containers, the primary control device 103, the secondary control device 104, and the application server 105 may be deployed on a same server, or the primary control device 103 and the application server 105 may be deployed on a same server, or the secondary control device 104 and the application server 105 may be deployed on a same server. In some implementation scenarios, alternatively, the data backup system 300 may include only one control device. In this case, the control device may have functions of the primary control device 103 and the secondary control device 104 in embodiments of this application. It should be understood that the data backup system 300 shown in FIG. 3 is merely used as an example for description, and is not limited in this embodiment.

During actual deployment, the data backup system 300 may be deployed in a cloud environment. For example, the data backup system 300 may be constructed based on a plurality of regions in the cloud environment. Alternatively, the data backup system 300 may be deployed in an edge environment and constructed through a plurality of equipment rooms in the edge environment. It should be understood that the cloud environment in this application represents a resource set that is set up by a cloud service provider and that is used to provide a service (for example, a data storage service) for tenants (the foregoing user 106 is a tenant) in a plurality of regions (regions) (for example, an East China region and a North China region). The cloud environment usually includes a large quantity of resources, and may provide a basic resource service and/or a software application service for tenants in each region. The edge environment in this application represents a resource set that provides a basic resource service and/or a software application service for tenants in a specific region. Compared with the cloud environment, the edge environment may be closer to the tenants in terms of a physical location, and a low latency of a service may be better ensured when some services are provided.

It should be understood that the architecture of the data backup system 300 shown in FIG. 3 is merely used as an example for description. In actual application, the architecture of the data backup system 300 may also use another possible implementation. For example, the data backup system 300 may further include another device, for example, a device configured to manage the primary cluster 101 and the secondary cluster 102. For another example, in addition to the HDFS component 1011 and the Hive component 1012 shown in FIG. 2, the primary cluster 101 in the data backup system 300 may further include more components. As shown in FIG. 2, the primary site 101 may further include a SparkSQL component with higher efficiency in service data processing, or may further include a lightweight directory access protocol (Lightweight Directory Access Protocol, LDAP) component, an active directory (active directory, AD) component, or the like. A specific implementation of the data backup system 300 is not limited in this embodiment.

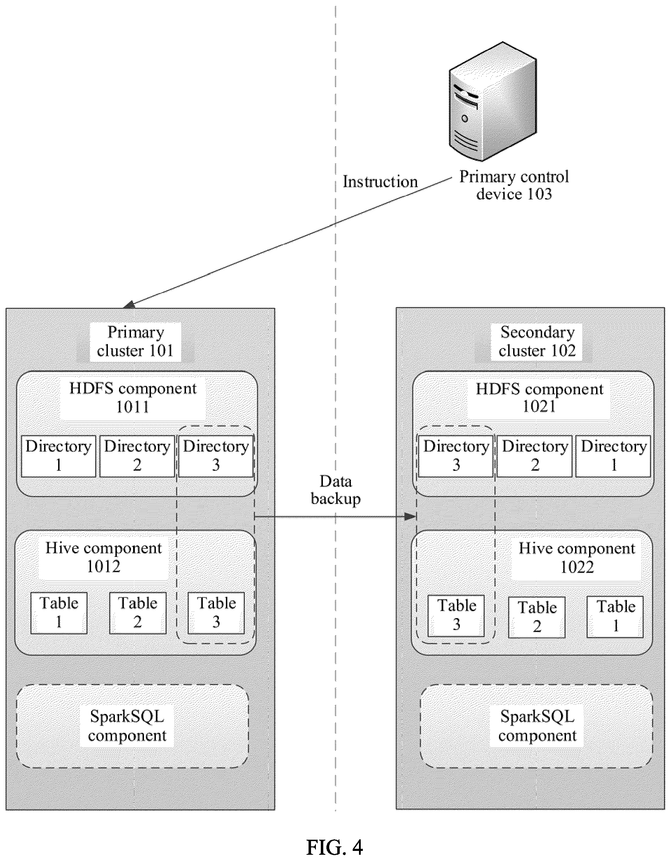

In the data backup system 300 shown in FIG. 3, when the primary control device 103 controls service data backup between the primary cluster 101 and the secondary cluster 102, data backup is specifically performed at a granularity of a service, so that the service data backed up to the secondary cluster 102 is consistent in a time dimension. Specifically, a data backup policy for a service is preconfigured in the primary control device 103, and the data backup policy includes information about a plurality of data sets that are related to the service and that are stored in the primary cluster 101 and the first moment. For example, as shown in FIG. 4, for the service of the user 106, in the plurality of data sets related to the service, some data sets may be a set of service data that is in the directory 3 of the user 106 and that is related to the HDFS component 1011 in FIG. 2, and the remaining data sets may be a set of service data that is in the table 3 of the user 106 and that is related to the Hive component 1012. In addition, the first moment in the data backup policy indicates that the service data backed up to the secondary cluster 102 is data that is related to the service, that has been stored in the primary cluster 101, and that is at the first moment. Then, when the data of the service in the primary cluster 101 needs to be backed up to the secondary cluster 102, the primary control device 103 may control, based on the data backup policy configured for the service, the primary cluster 101 or the secondary cluster 102, to back up, to the secondary cluster 102, a plurality of data sets related to the service that are in the primary cluster 101, and that are at the first moment. For example, the primary control device 103 may send an instruction to the primary cluster 101, to instruct the primary cluster 101 or the secondary cluster 102 to back up, at the first moment, the service data that is in the directory 3 and that is related to the HDFS component 1011 and the service data that is in the table 3 and that is related to the Hive component 1012 to the secondary cluster 102. In this way, the data backed up to the secondary cluster 102 by using the service as a granularity is data that is related to the service and that has been stored in the primary cluster 101 at the first moment, so that the backed up data related to the service may be consistent in a time dimension. In this way, when the primary cluster 101 is faulty, the secondary cluster 102 may restore running of the service based on service data in a same time period, avoid, as much as possible, an error in providing a business service by the data backup system 300. This may improve reliability of storing service data by the data backup system 300 for the user, and improve business service quality.

The following describes in detail various non-limiting specific implementations of the data backup system.

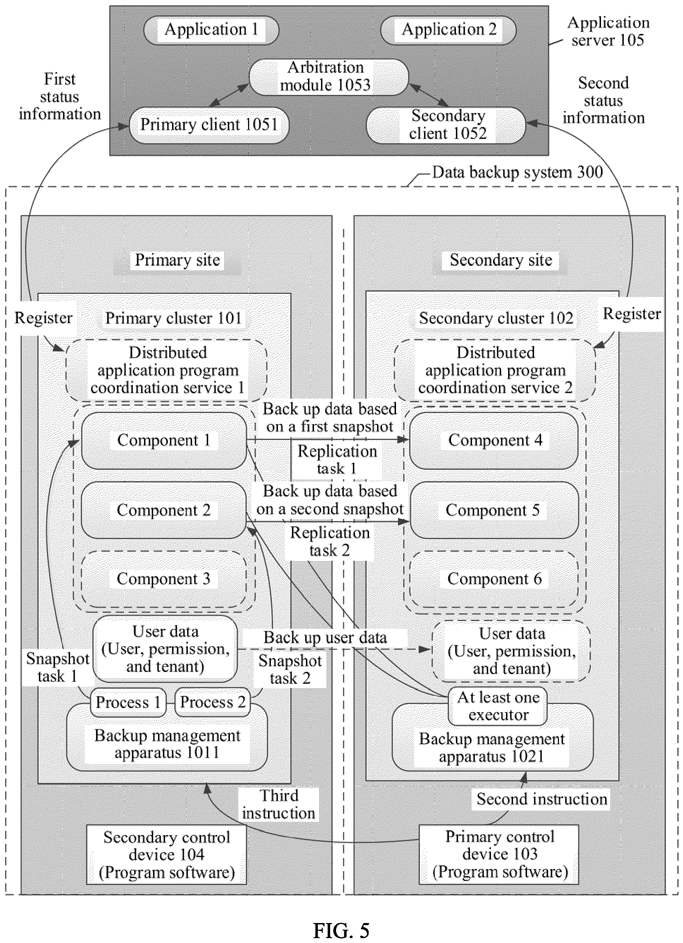

Based on the data backup system 300 shown in FIG. 3, refer to the data backup system 300 shown in FIG. 5. A primary cluster 101 may include one or more components configured to process or store service data. As shown in FIG. 5, the primary cluster 101 includes a component 1, a component 2, a component 3, and the like. The component 1, the component 2, and the component 3 may be configured to process or store service data of one or more users. In addition, in actual application, any one or more components may be configured to process or store different data of a same service. For example, the component 1 and the component 2 may encapsulate different data of a same service into different data formats and store the different data. When the primary cluster 101 (and a secondary cluster 102) is constructed based on a hadoop architecture, the component 1 may be, for example, the HDFS component 1011 in FIG. 2, configured to encapsulate a part of service data of one service into a format of a file and store the file; and the component 2 may be, for example, the Hive component 1012 in FIG. 2, configured to encapsulate another part of service data of the service into structured data. Alternatively, the component 1 and the component 2 may encapsulate different service data of a same service into a same format for storage. For example, the component 1 may be the Hive component in FIG. 2, and the component 2 may be the SparkSQL component in FIG. 2. In addition, both the component 1 and the component 2 may encapsulate data of the service into structured data for storage (data reading and writing performance of the SparkSQL component is generally higher than data reading and writing performance of the Hive component). In this embodiment, the component 1, the component 2, and the component 3 may be any component that is in the primary cluster 101 and that is configured to encapsulate and store non-streaming data. In addition, components used for processing or storing data of different services may be different. For example, when data of a service 1 is processed or stored, the used components may include only the component 1; when data of a service 2 is processed or stored, the used components may include the component 1 and the component 2; and when data of a service 3 is processed or stored, the used components may include the component 1, the component 2, and the component 3.

The secondary cluster 102 may also include one or more components. As shown in FIG. 5, the secondary cluster 102 includes a component 4, a component 5, a component 6, and the like. The secondary cluster 102 is similar to the primary cluster 101. The component 4, the component 5, and the component 6 in the secondary cluster 102 may be configured to process or store service data of one or more users. Different data of a same service may be encapsulated into a same data format or different data formats, and components used to process or store data of different services may be different. The components on the secondary cluster 102 may be used as backup of the components in the primary cluster 101. For example, the component 4 in the secondary cluster 102 may be used as backup of the component 1 in the primary cluster 101, the component 5 may be used as backup of the component 2, and the component 6 may be used as backup of the component 3. Correspondingly, before the primary cluster 101 is faulty, the secondary cluster 102 periodically backs up the service data in the primary cluster 101. In a process of backing up the service data, service data related to each component in the primary cluster 101 may be backed up to a component that is used as backup in the secondary cluster 102. For example, service data related to the component 1 in the primary cluster 101 may be backed up to a storage area corresponding to the component 4 in the secondary cluster 102; service data related to the component 2 may be backed up to a storage area corresponding to the component 5; and service data related to the component 3 may be backed up to a storage area corresponding to the component 6. In this way, when the primary cluster 101 is faulty and the secondary cluster 102 takes over a service in the primary cluster 101, the secondary cluster 102 may continue to provide a service of reading and writing service data for a user by using data that is backed up to the storage areas respectively corresponding to the component 4, the component 5, and the component 6.

In actual application, a cloud environment or an edge environment in which the primary cluster 101 and the secondary cluster 102 are located includes a large quantity of computing devices (for example, servers), so that a plurality of groups of primary clusters and a plurality of groups of secondary clusters may be constructed in the cloud environment or the edge environment. Therefore, the primary cluster 101 and the secondary cluster 102 may be paired in the cloud environment or the edge environment in advance, to construct the data backup system 300 shown in FIG. 5.

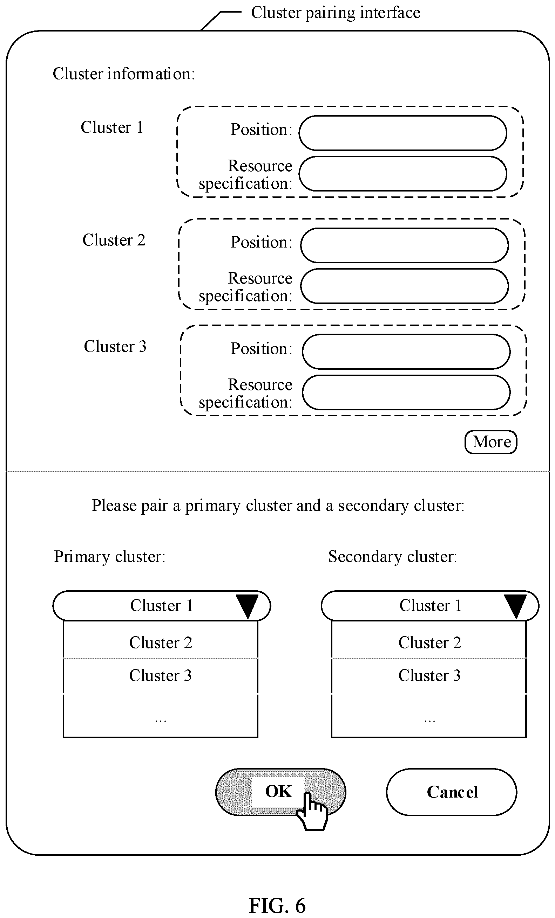

In an implementation example, the cloud environment or the edge environment may present a cluster pairing interface shown in FIG. 6 to an administrator, and not only a plurality of groups of cluster identifiers (such as a cluster 1, a cluster 2, and a cluster 3 shown in FIG. 6) may be presented on the cluster pairing interface, but also related information of each cluster, such as location information, resource specification information, and the like of the cluster shown in FIG. 6 may be presented on the cluster pairing interface, so that the administrator may select a corresponding cluster as the primary cluster 101 and the secondary cluster 102 from a plurality of clusters presented on the cluster pairing interface, to construct the data backup system 300. In actual application, the cloud environment or the edge environment may alternatively construct the data backup system 300, or the like based on a pairing operation performed by the user on the primary cluster 101 and the secondary cluster 102. This is not limited in this embodiment.

After the primary cluster 101 and the secondary cluster 102 are paired, data communication may be performed between the primary cluster 101 and the secondary cluster 102. For example, the secondary cluster 102 may periodically back up service data in the primary cluster 101 to the secondary cluster 102. In a further possible implementation, before service data backup is performed between the primary cluster 101 and the secondary cluster 102, a communication authentication process may be completed in advance, so that the primary cluster 101 and the secondary cluster 102 mutually trust each other. For example, communication authentication may be performed between the primary cluster 101 and the secondary cluster 102 based on a trusted third-party authentication protocol in a transmission control protocol/internet protocol (Transmission Control Protocol/Internet Protocol, TCP/IP) network system design. The third-party authentication protocol may be, for example, a Kerberos protocol. In actual application, a communication authentication process may be automatically performed between the primary cluster 101 and the secondary cluster 102, or communication authentication between the two clusters may be completed with intervention of the user or the administrator. In this way, security and reliability of data communication between the primary cluster 101 and the secondary cluster 102 may be improved.

After the data backup system 300 is constructed and communication authentication between the primary cluster 101 and the secondary cluster 102 is completed, data of the first service in the primary cluster 101 may be backed up to the secondary cluster 102 at a granularity of a service between the primary cluster 101 and the secondary cluster 102. The following uses an example in which data of a first service of a user 1 is backed up for description.

During specific implementation, as shown in FIG. 5, program software used to configure a data backup policy and control the primary/secondary cluster may run on the primary control device 103. For example, the program software may configure a first data backup policy for the first service of the user 1. The first data backup policy includes information about a plurality of data sets related to the first service in the primary cluster 101 and a first moment. The plurality of data sets related to the first service may specifically include a data set processed or stored by the component 1 and a data set processed or stored by the component 2. In this embodiment, the plurality of data sets related to the first service may also be referred to as a first protection group. For example, information about the first protection group may be specifically an identifier of a file directory in the component, for example, a name of the directory 3 in FIG. 2; or may be an identifier of a table in the component, for example, a name of the table 3 in FIG. 2. The first moment indicates that the service data backed up to the secondary cluster 102 is a plurality of data sets that are related to the first service and that have been stored in the primary cluster 101 at the first moment.

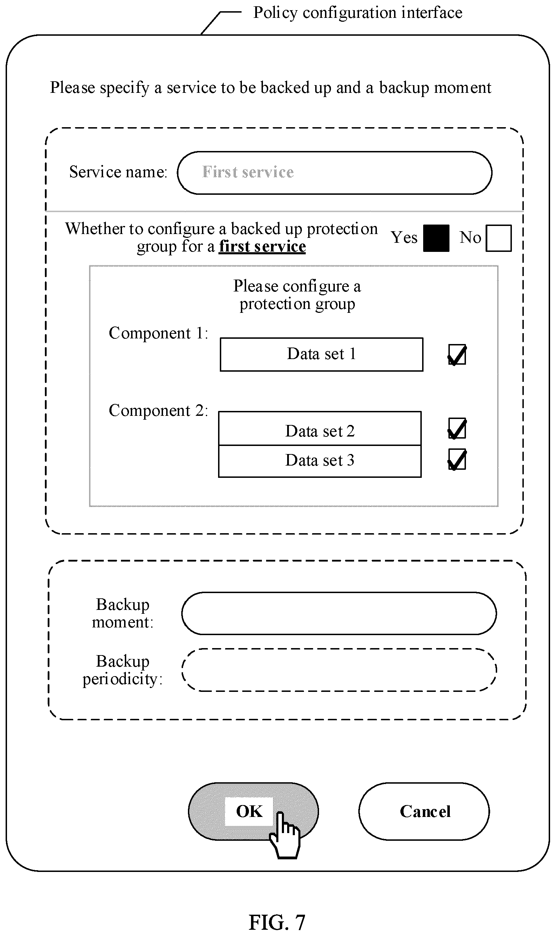

In a possible implementation, the primary control device 103 may configure a first data backup policy for the first service based on an operation of the user 1. For example, the primary control device 103 may present a policy configuration interface shown in FIG. 7 to the user 1, and the policy configuration interface may present prompt information (as shown in FIG. 7, "Please specify a service to be backed up and a backup moment"), to prompt the user 1 to enter an identifier (for example, a name of the first service) of the to-be-configured first service and a moment for backing up data of the first service. Then, the primary control device 103 may prompt, based on the identifier of the first service entered by the user 1 on the control policy configuration interface, whether to configure a first protection group for the first service. In addition, after learning that the user 1 determines to configure the first protection group for the first service (for example, the user 1 clicks a "Yes" button on the policy configuration interface), names of one or more data sets related to the first service that are stored in the primary cluster 101 are further presented, for example, a name of a data set 1 related to the component 1, a name of a data set 2 related to the component 2, and a name of a data set 3 related to the component 2 shown in FIG. 7, and the user 1 is prompted to configure the first protection group for the first service. In other words, the user 1 is prompted to configure one or more data sets that are related to the first service and that need to be backed up to the secondary cluster 102. In this way, the primary control device 103 may determine, based on a selection operation or an input operation performed by the user 1 on the data set 1 to the data set 3, that a protection group of the first service includes the data set 1, the data set 2, and the data set 3. In addition, the primary control device 103 may further obtain a first moment at which the user 1 enters, on the policy configuration interface, the data of the first service for backup, so that the primary control device 103 generates, based on the first moment and the information about the first protection group, a first data backup policy corresponding to the first service. In actual application, the secondary cluster 102 may periodically back up the data of the first service on the primary cluster 101. In this case, both an input box of a backup moment and an input box of a backup period may be simultaneously presented on the policy configuration interface, so that the user 1 enters the first moment in the input box of the backup moment on the policy configuration interface, to be specific, enters a start moment of the periodic backup. In addition, the user 1 may further enter a backup period in the input box of the backup period on the policy configuration interface, so that the secondary cluster 102 periodically backs up, starting from the first moment and based on the backup period configured by the user 1, the data that is of the first service and that is stored in the primary cluster 101. Correspondingly, during the second backup (and subsequent backup) in a process of periodic backup, the primary control device 103 may determine a moment of the second backup based on the first moment and the backup period, to back up the plurality of data sets related to the first service that are in the primary cluster and that are at the moment of the second backup to the secondary cluster 102.

Certainly, the foregoing example is merely used as an example for description, and is not used to limit a specific implementation of configuring the first data backup policy by the primary control device 103. For example, in another example, the user 1 may also directly enter an identifier (for example, a name, a number, or the like of a data set) of a data set related to the first service on the policy configuration interface, to specify the first protection group of the first service; or the primary control device 103 may also automatically determine all data sets related to the first service as the first protection group of the first service.

After successfully configuring the first data backup policy for the first service, the primary control device 103 may control, based on the first data backup policy, the primary cluster 101 or the secondary cluster 102 to back up, to the secondary cluster 102, the plurality of data sets related to the first service that are in the primary cluster 101 and that are at the first moment.

In an implementation example, the primary control device 103 may generate a third instruction based on the data backup policy, and send the third instruction to the primary cluster 101, to instruct the primary cluster 101 to obtain snapshots of the plurality of data sets that are related to the first service and that are at the first moment. The third instruction may include information about the first protection group and the first moment, and the first moment is later than a moment at which the primary control device 103 sends the third instruction to the primary cluster 101. Correspondingly, after receiving the third instruction, the primary cluster 101 parses out the information about the first protection group and the first moment in the third instruction, and determines, based on the information about the first protection group, the plurality of data sets related to the first service that are separately processed or stored by the component 1 and the component 2 and that are in the primary cluster 101. Then, the primary cluster 101 may create a process 1 and a process 2 by using a backup management apparatus 1011 on the primary cluster 101, and start a snapshot task 1 and a snapshot task 2 that include the first moment. The process 1 is responsible for performing the snapshot task 1, and is specifically configured to access the component 1 and take a snapshot at a first moment for a data set that is related to the first service and that is processed or stored by the component 1, to obtain a first snapshot. In addition, the process 2 is responsible for performing the snapshot task 2, and is specifically configured to access the component 2 and take a snapshot at a first moment for a data set that is related to the first service and that is processed or stored by the component 2, to obtain a second snapshot. In another embodiment, the backup management apparatus 1011 may also perform the snapshot task by using at least one executor on the primary cluster 101, where each executor may be implemented, for example, through an execution thread.

After the snapshot of the service data is taken, the backup management apparatus 1011 may notify the primary control device 103 in the secondary cluster 102 that the snapshot is taken, so that the primary control device 103 may deliver a second instruction to the backup management apparatus 1021 in the secondary cluster 102, to instruct the secondary cluster 102 to replicate data corresponding to the snapshot that is at the first moment and that is of the plurality of data sets related to the first service in the primary cluster 101. For example, the second instruction may include indication information of the first snapshot and indication information of the second snapshot. The backup management apparatus 1021 may determine the first snapshot and the second snapshot on the primary cluster 101 based on the second instruction, and start the replication task 1 for the first snapshot and start the replication task 2 for the second snapshot. When the replication task is performed, the secondary cluster 102 may include at least one executor. The at least one executor may perform the replication task 1. Specifically, the at least one executor may read the first snapshot of the primary cluster 101 at the first moment, and replicate, to the secondary cluster 102 based on the first snapshot, a data set that is related to the first service and that is processed or stored by the component 1, for example, may write the data set into a storage area corresponding to the component 4 in the secondary cluster 102. In addition, at least one executor in the secondary cluster 102 may perform the replication task 2. Specifically, the at least one executor may read the second snapshot of the primary cluster 101 at the first moment, and replicate, to the secondary cluster 102 based on the second snapshot, a data set that is related to the first service and that is processed or stored by the component 2, for example, may write the data set into a storage area corresponding to the component 5 in the secondary cluster 102. In this way, data that belongs to the first service and that is in the primary cluster 101 may be backed up to the secondary cluster 102 at a granularity of a service. In addition, the service data backed up to the secondary cluster 102 is the data that is of the first service and that has been stored in the primary cluster 101 at the first moment, so that for data of a same service and the backed up service data may be consistent in a time dimension.

In this embodiment, the secondary cluster 102 may sequentially perform a plurality of replication tasks by using one executor; or the secondary cluster 102 may concurrently perform a plurality of replication tasks by using a plurality of executors, to improve data backup efficiency. In addition, the backup management apparatus 1011 on the primary cluster 101 and the backup management apparatus 1021 on the secondary cluster 102 may be application programs running on corresponding servers. Alternatively, the backup management apparatus 1011 and the backup management apparatus 1021 may be hardware that runs an application program, for example, any one of a processor core, a processor, and a server that are separately configured. A specific implementation of the backup management apparatus is not limited in this embodiment.

In the foregoing implementation, an example in which the secondary cluster 102 actively backs up the service data is used for description. In actual application, the primary cluster 101 may also actively back up the data set related to the first service to the secondary cluster 102.

In an implementation example, after determining that the primary cluster 101 completes taking snapshots of the plurality of data sets of the first service related to the component 1 and the component 2, the primary control device 103 may send a first instruction to the primary cluster, to instruct the primary cluster 101 to send, to the secondary cluster 102, data corresponding to the snapshots of the plurality of data sets related to the first service that are at the first moment. For example, the first instruction may include indication information of the first snapshot and indication information of the second snapshot. After receiving the first instruction, the primary cluster 101 may determine the first snapshot and the second snapshot on the primary cluster 101 based on the first instruction. Then, the primary cluster 101 may transmit, to the secondary cluster 102 through one or more executors based on the first snapshot, the data set that is related to the first service and that is processed or stored by the component 1; and transmit, to the secondary cluster 102 through the one or more executors based on the second snapshot, the data set that is related to the first service and that is processed or stored by the component 2. A specific implementation process in which the primary cluster 101 performs data backup based on the snapshot is similar to the specific implementation in which the secondary cluster 102 performs data backup based on the snapshot. For understanding, refer to the foregoing related descriptions. Details are not described herein again.

Further, after the plurality of data sets related to the first service are backed up to the secondary cluster 102, the secondary cluster 102 may further take snapshots of the plurality of data sets that are backed up, and store the obtained snapshots. In this case, the snapshot obtained after the secondary cluster 102 takes a snapshot of the backed up service data is usually consistent with the snapshot obtained after the primary cluster 101 takes a snapshot of the data of the first service at the first moment. In this way, the secondary cluster 102 may determine, at a future moment by using the snapshot, the data that is of the first service and that is stored in the data backup system 300 at the first moment.

In an actual application scenario, the primary cluster 101 and the primary control device 103 may be constructed by different computing devices, and therefore, clock sources between the primary cluster 101 and the primary control device 103 may not be unified. In this way, the first moment indicated by the primary control device 103 in the third instruction may be different from the moment at which the primary cluster 101 actually performs a snapshot operation. For example, it is assumed that a clock on the primary control device 103 runs 5 seconds faster than a clock on the primary cluster 101, and the first moment indicated by the primary control device 103 in the third instruction is 13:00:00. When the primary cluster 101 performs the snapshot operation based on the first instruction, because the clock runs 5 seconds slower than the primary control device 103, the moment at which the primary cluster 101 actually performs the snapshot operation is 13:00:05 of the primary control device 103. As a result, a moment at which the primary control device 103 indicates to take a snapshot of the data of the first service is inconsistent with a moment at which the primary cluster 101 actually performs the snapshot operation. Based on this, in this embodiment, a same clock source may be set between the primary cluster 101 and the primary control device 103. For example, the primary control device 103 may perform clock synchronization with the primary cluster 101 through a network time protocol (Network Time Protocol, NTP), so that the primary control device 103 and the primary cluster 101 have a same clock source. Certainly, clock synchronization between the primary cluster 101 and the primary control device 103 may also be implemented in another manner. This is not limited in this embodiment. Further, the primary cluster 101 and the primary control device 103 may further perform clock synchronization with the secondary cluster 102, to implement clock unification in the data backup system 300.

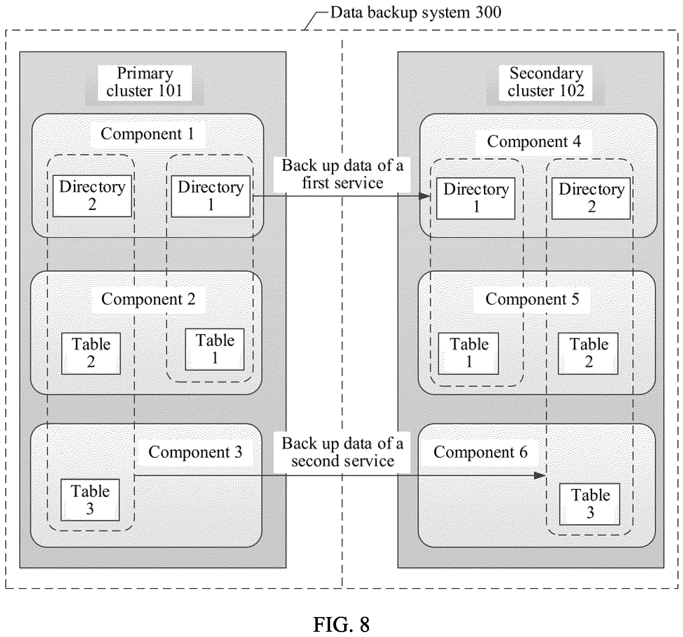

In an actual application scenario, the primary cluster 101 may not only store data of the first service, but also store data of another service. In addition, data of different services is usually different, and different services may come from a same user or different users. For example, the primary cluster 101 stores both the data of the first service and the data of the second service. The data of the first service may be the service data in the directory 1 shown in FIG. 8 and the service data in the table 1, and the data of the second service may be the service data in the directory 2 shown in FIG. 8, the service data in the table 2, and the service data in the table 3. Therefore, when taking a snapshot of and performing backup on the service data by using the service as a granularity, in addition to configuring the first data backup policy for the first service, the primary control device 103 may further configure the second data backup policy for the second service, where the second data backup policy includes information about a plurality of data sets related to the second service in the primary cluster 101 and the second moment. In this embodiment, the plurality of data sets related to the second service may also be referred to as a second protection group. The second protection group includes a data set that is related to the second service and that is processed or stored by the component 1 in the primary cluster 101, a data set that is related to the second service and that is processed or stored by the component 2, and a data set that is related to the second service and that is processed or stored by the component 3 (it is assumed that the primary cluster 101 processes or stores data of the second service by using the component 1, the component 2, and the component 3). In this way, the primary control device 103 may control, based on the second data backup policy, the primary cluster 101 or the secondary cluster 102 to back up the second protection group (namely, the plurality of data sets related to the second service) in the primary cluster at the second moment to the secondary cluster 102. A specific implementation process in which the primary control device 103 configures the second data backup policy and backs up, to the secondary cluster 102 based on the second data backup policy, the plurality of data sets that are related to the second service and that are in the primary cluster 101 is similar to a specific implementation process in which the primary control device 103 configures the first data backup policy and backs up, to the secondary cluster 102 based on the first data backup policy, the plurality of data sets related to the first service that are in the primary cluster 101. For details, refer to related descriptions in the foregoing embodiments. Details are not described herein again.

Generally, the service data in the primary cluster 101 may be periodically backed up to the secondary cluster 102. In an implementation, the service data backed up to the secondary cluster 102 each time may be all service data that belongs to the first service and that is in the primary cluster 101. In another implementation, when the first backup is performed between the primary cluster 101 and the secondary cluster 102, the service data backed up to the secondary cluster 102 may be data that is related to the first service and that has been stored in the primary cluster 101 at the first moment. When the second backup is performed between the primary cluster 101 and the secondary cluster 102, the service data backed up to the secondary cluster 102 may be incremental data in the primary cluster 101 in a period from the first moment to the third moment. The third moment is a moment at which the data of the first service is backed up for the second time. In an implementation example, after completing taking a snapshot of the service data at the first moment, the primary cluster 101 may take a snapshot of the data set that is related to the first service and that is processed or stored by the component 1 at the third moment, to obtain a third snapshot, and simultaneously take a snapshot of the data set that is related to the first service and that is processed or stored by the component 2 at the third moment, to obtain a fourth snapshot, where the third moment is later than the first moment. In actual application, interval duration between the second moment and the first moment may be, for example, a data backup periodicity between the primary cluster 101 and the secondary cluster 102. Alternatively, the second moment may also be specified by the primary control device 103. After completing a second round of snapshot operations, the primary cluster 101 may notify the primary control device 103 of the second round of snapshot operations through the backup management apparatus 1011, and the primary control device 103 indicates the backup management apparatus 1021 to perform a second round of service data backup process. Similar to a first round of service data backup process, the backup management apparatus 1021 may start a new replication task 3 and a new replication task 4 for a third snapshot and a fourth snapshot. Then, the secondary cluster 102 may perform the replication task 3 by using at least one executor. Specifically, the secondary cluster 102 may determine, based on the first snapshot and the third snapshot, incremental data (referred to as first incremental data below) that is related to the first service and that is processed or stored by the component 1 in the primary cluster 101 in a time period from the first moment to the third moment, and back up the first incremental data to the secondary cluster 102, for example, may back up the first incremental data to a storage area corresponding to the component 4. In addition, the secondary cluster 102 may perform the replication task 4 by using at least one executor. Specifically, the secondary cluster 102 may determine, based on the second snapshot and the fourth snapshot, incremental data (referred to as second incremental data below) that is related to the first service and that is processed or stored by the component 2 in a time period from the first moment to the third moment, and back up the second incremental data to the secondary cluster 102, for example, may back up the first incremental data to a storage area corresponding to the component 5. In this way, each time service data is backed up subsequently, only incremental data may be transmitted between the primary cluster 101 and the secondary cluster 102, and all service data related to the first service in the primary cluster 101 may not be transmitted to the secondary cluster 102, so that a transmission amount of service data between the primary cluster 101 and the secondary cluster 102 may be effectively reduced. This improves backup efficiency, and also reduces resource consumption required for backing up the service data.

The foregoing describes a data backup process between the primary cluster 101 and the secondary cluster 102. The following describes a disaster recovery switchover process in the data backup system 300 when the primary cluster 101 is faulty.

After the service data in the primary cluster 101 is backed up to the secondary cluster 102, if the primary cluster 101 is faulty, it may be difficult for the primary cluster 101 to continue to provide a reading and writing service of the service data for the user. In this case, the secondary cluster 102 may take over a service currently running in the primary cluster 101, and continue to provide the reading and writing service of the service data for the user by using the service data that is backed up in advance, to ensure reliability of the data backup system 300 for storing the service data of the user.

Generally, the user may access, through a client on the application server 105, the service data stored in the primary cluster 101 or the secondary cluster 102. For example, as shown in FIG. 5, the application server 105 includes a primary client 1051 and a secondary client 1052. Before the primary cluster 101 is faulty, the user may access the primary cluster 101 through the primary client 1051 on the application server 105. After the primary cluster 101 is faulty, the user may access the secondary cluster 102 through the secondary client 1052 on the application server 105.

In actual application, after the primary cluster 101 is faulty, the application server 105 may automatically adjust a client accessing the cluster from the primary client 1051 to the secondary client 1052.

First, when the application server 105 is running, a cluster that is faulty may be sensed through the primary client 1051 and the secondary client 1052. In an example, the primary client 1051 may register a detection event with a distributed application program coordination service 1 (such as a zookeeper service) on the primary cluster 101, and receive a detection result fed back by the distributed application program coordination service 1. The detection result may indicate whether the primary cluster 101 is faulty (for example, fails). In addition, the secondary client 1052 may also register a detection event with a distributed application program coordination service 2 (such as a zookeeper service) on the secondary cluster 102, and receive a detection result fed back by the distributed application program coordination service 2. The detection result may indicate whether the secondary cluster 102 is faulty (for example, fails). For example, in a process in which the secondary cluster 102 takes over the service that is run before the primary cluster 101 is faulty, the application server 105 may determine, through the secondary client 1052, whether the secondary cluster 102 is faulty, and after determining that the secondary cluster 102 is not faulty, indicate the secondary cluster 102 to take over the service that is run before the primary cluster 101 is faulty.

Then, after perceiving that the primary cluster 101 is faulty, the application server 105 may switch, based on status information of the cluster, a client that accesses the cluster. Specifically, the application server 105 may further include an arbitration module 1053, and may separately obtain, from the primary client 1051 and the secondary client 1052, information indicating an identity of the primary cluster 101 and an identity of the secondary cluster 102. After the primary client 1051 registers a detection event with the distributed application program coordination service 1, the distributed application program coordination service 1 may feed back first status information to the primary client 1051. The first status information indicates whether the cluster is a primary identity or a secondary identity (to be specific, indicate whether the cluster is currently a primary cluster or a secondary cluster), or indicate whether the cluster is invalid (for example, the cluster is invalid due to a cluster fault). In addition, the distributed application program coordination service 2 may feed back second status information to the secondary client 1052, where the second status information indicates whether the secondary client 1052 is a primary identity or a secondary identity, or indicates whether the cluster fails. Then, the arbitration module 1053 may separately obtain the first status information from the primary client 1051 and obtain the second status information from the secondary client 1052. When the first status information indicates that the primary cluster 101 is the secondary identity or the cluster is invalid, and the second status information indicates that the secondary cluster 102 is the primary identity, the arbitration module 1053 may determine that the client accessing the cluster by the application server 105 is switched to the secondary client 1052. It should be noted that before the primary cluster 101 is faulty, the first status information indicates that the primary cluster 101 is the primary identity, and the second status information indicates that the secondary cluster 102 is the secondary identity. However, after the primary cluster 101 is faulty, the primary control device 103 may prompt the user or the administrator with information about the fault of the primary cluster, so that the user or the administrator adjusts the identity of the secondary cluster 102 from the secondary identity to the primary identity through an identity adjustment operation performed by the primary control device 103 or another device for the secondary cluster. In this way, abnormal primary/secondary identity switchover of the primary cluster 101 and the secondary cluster 102 that is caused by a program running error in the data backup system 300 may be avoided as much as possible. Further, the user or the administrator may further adjust the identity of the primary cluster. Specifically, the identity of the primary cluster 101 may be adjusted from the primary identity to the secondary identity (or the cluster is invalid), to implement identity reversal between the primary cluster 101 and the secondary cluster 102. In this case, the first status information obtained by the arbitration module 1053 from the primary client 1051 indicates that the primary cluster 101 is the secondary identity or the cluster is invalid, and the second status information obtained from the secondary client 1052 indicates that the secondary cluster 102 is the primary identity.

In this way, after the primary cluster 101 is faulty, the application server 105 may automatically switch a cluster that accesses data from the primary cluster 101 to the secondary cluster 102, without a need of manual intervention to switch the cluster accessed by the application server 105, to improve flexibility of the data backup system 300 and reduce manual operation and maintenance costs.

It should be noted that in the foregoing description of this embodiment, an example in which the application server 105 and the primary control device 103 are independently deployed, and the primary client 1051, the secondary client 1052, and the arbitration module 1053 are deployed on the application server 105 is used for description. In another possible data backup system 300, the application server 105 may be integrated with the primary control device 103 for deployment. In other words, one device implements functions of the application server 105 and the primary control device 103. The device may be referred to as a control device or an application server. To be specific, the control device or the application server may be integrated with the primary client 1051, the secondary client 1052, and the arbitration module 1053 shown in FIG. 4, and the control device or the application server performs operations such as accessing a cluster and sensing a cluster fault performed by the application server 105. In some other embodiments, when the application server 105 and the primary control device 103 are deployed independently, functions of the primary client 1051, the secondary client 1052, and the arbitration module 1053 in the application server 105 may also be implemented by the control device 103. In other words, the control device 103 performs an operation of automatic switchover on the primary/secondary client. Because the primary/secondary client is in the control device 103, a reading and writing request of data generated by the application server 105 is sent to the control device 103, and a primary client (or a secondary client) that is currently the primary identity in the control device 103 reads and writes data in the primary cluster (or the secondary cluster).

Further, when both the first status information and the second status information indicate that the respective clusters are primary clusters (for example, before the primary cluster 101 after fault recovery is managed by the primary control device 103, the distributed application program coordination service 1 on the primary cluster 101 indicates to the primary client 1051 that the cluster is the primary cluster), and the application server 105 still accesses the cluster by using a current access policy, to be specific, may not switch the currently accessed cluster.

In this embodiment, in a process in which the secondary cluster 102 takes over services that are run before the primary cluster 101 is faulty, not only data related to these services is required, but also data of users to which the services belong, such as a user name and user permission, is required.

For example, after the application server 105 switches the cluster accessed by the application server 105 from the primary cluster 101 to the secondary cluster 102, operation and maintenance personnel may configure corresponding user data in the secondary cluster 102, so that the secondary cluster 102 provides a corresponding data reading and writing service based on the user data. The configured user data may include, for example, at least one of data such as a user identifier, user permission, and an identifier of a tenant to which the user belongs. Generally, a manual configuration process of the operation and maintenance personnel, for example, performing operations such as creating a user and a tenant and applying for permission on the secondary cluster 102, increases a recovery time object (recovery time object, RTO) of the data backup system 300, to be specific, increases duration from a time point at which the data backup system 300 suspends a service to a time point at which the data backup system 300 recovers the service after a disaster (the primary cluster 101 fault) occurs.

Based on this, in another implementation, before the primary cluster 101 is faulty, the secondary cluster 102 may not only back up the service data in the primary cluster 101 to the secondary cluster 102, but also back up the user data in the primary cluster 101 to the secondary cluster 102. During specific implementation, the primary control device 103 may send a fourth instruction to the primary cluster 101, to instruct the primary cluster 101 to synchronize the user data to the secondary cluster 102 based on the fourth instruction. Alternatively, the primary control device 103 may obtain user data stored in the primary cluster 101 and the secondary cluster 102, and adjust, based on the user data stored in the primary cluster 101, the user data stored in the secondary cluster 102, so that the user data stored in the primary cluster 101 is consistent with the user data stored in the secondary cluster 102. For example, the primary control device 103 adds user data that is not stored to the secondary cluster 102 based on the user data stored in the primary cluster 101, or modifies the user data stored in the secondary cluster 102. In this way, when the secondary cluster 102 takes over a service on the primary cluster 101, the secondary cluster 102 may provide a corresponding business service for a user based on the user data backed up to the secondary cluster 102, so that operation and maintenance personnel do not need to perform manual configuration on the secondary cluster 102. In this way, not only operation and maintenance costs of the operation and maintenance personnel may be reduced, but also a recovery time objective of the data backup system 300 may be effectively reduced.

It should be noted that in the foregoing implementation, an example in which the primary cluster 101 is faulty is used for description. In an actual application scenario, when the primary cluster 101 is not faulty, if a cluster switchover command indicated by the user or the administrator is received, the application server 105 may automatically switch an accessed cluster from the primary cluster 101 to the secondary cluster 102. A specific implementation process of implementing cluster switchover is similar to the foregoing implementation process. For understanding, refer to the foregoing related description, details are not described herein.

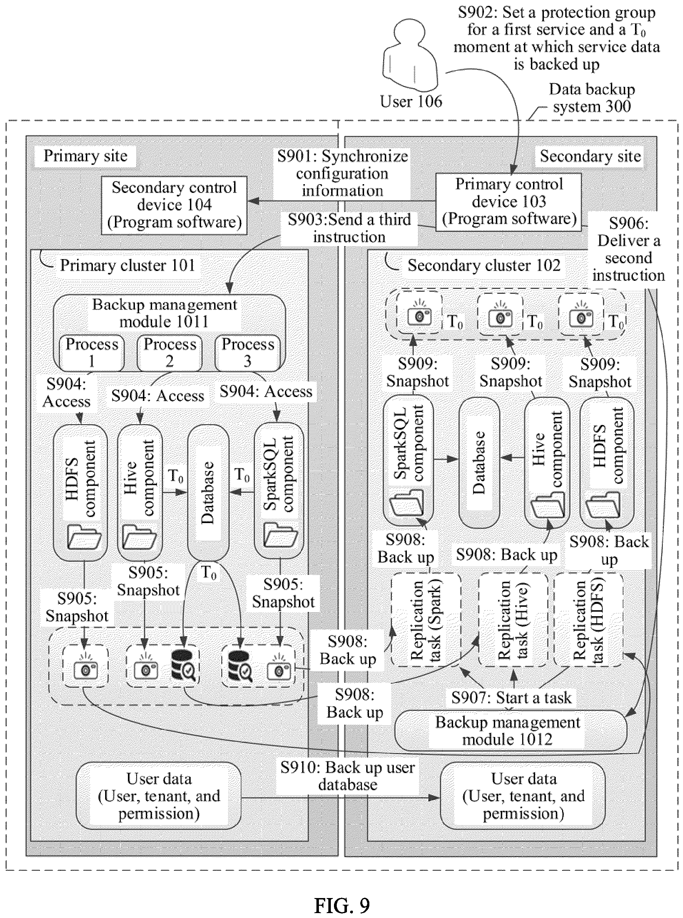

FIG. 9 is a schematic flowchart of a data backup method according to an embodiment of this application. The method may be applied to the data backup system 300 shown in FIG. 5. The method is described by using an example in which a primary cluster and a secondary cluster are clusters constructed based on a Hadoop architecture. In this embodiment, in the data backup system 300 shown in FIG. 5, a component 1 and a component 4 are specifically HDFS components, a component 2 and a component 5 are specifically Hive components, and a component 3 and a component 6 are specifically SparkSQL components. When a cluster accessed by an application server 105 is switched to a secondary cluster 102, a secondary control device 104 may back up service data that is newly stored in the secondary cluster 102 to a primary cluster 101 (for example, the primary cluster 101 may complete recovery after a fault occurs). In actual application, a function of the secondary control device 104 is similar to a function of a primary control device 103. For details, refer to the following function description of the primary control device 103. The following uses an example in which service data at a moment T₀ is backed up for description. The data backup method shown in FIG. 9 may specifically include the following steps.

S901: A primary control device 103 synchronizes configuration information to a secondary control device 104.

In this embodiment, in a process in which the primary cluster 101 runs normally, the primary control device 103 may control to back up service data in the primary cluster 101 to the secondary cluster 102. Correspondingly, after the primary cluster 101 is faulty, the secondary cluster 102 may take over a service on the primary cluster 101. In the process, if the primary cluster 101 is recovered from the fault, the secondary control device 104 may control to back up service data on the secondary cluster 102 to the primary cluster 101 (that is recovered after the fault). Therefore, the primary control device 103 may synchronize configuration information related to the primary control device 103 to the secondary control device 104 in advance, so that after the primary cluster 101 is faulty, the secondary control device 104 may control to implement a corresponding service data backup process, and operation and maintenance personnel do not need to repeatedly perform manual configuration. The configuration information in the primary control device 103 may be configured in the primary control device 103 by an administrator in a device deployment process, so that the primary control device 103 may control, based on the configured information, data backup between the primary cluster 101 and the secondary cluster 102.

For example, the configuration information synchronized by the primary control device 103 may include related information of the data backup system 300, for example, information such as a pairing relationship between the primary cluster 101 and the secondary cluster 102, a resource included in the data backup system 300, and a time point of service data currently backed up by the data backup system 300.

It should be understood that S801 is optional. In some embodiments, the secondary control device 104 may also actively obtain the configuration information, or may be configured by an administrator on the secondary control device 104.

S902: The primary control device 103 configures a data backup policy for a first service based on a setting operation of a user 106, where the data backup policy includes information about a protection group and a moment T₀ for backing up data of the first service, and the information about the protection group indicates a data set that is related to the first service and that is stored by an HDFS component, a Hive component, and a SparkSQL component.

In actual application, the user 106 may set, based on a data set generated when data of the first service is stored in the primary cluster 101, a protection group corresponding to the first service. The information about the protection group indicates a plurality of data sets that are related to the first service and that are in the primary cluster 101, so that the plurality of data sets indicated by the protection group are backed up to the secondary cluster 102 when the data of the first service is backed up subsequently. For a specific implementation process in which the user 106 creates the protection group for the first service, refer to related descriptions in the foregoing embodiments. Details are not described herein again.

In this embodiment, an example in which the protection group includes a plurality of data sets that are related to the first service and that are stored by an HDFS component, a Hive component, and a SparkSQL component is used, and the information about the protection group may be, for example, identifiers of the plurality of data sets. In another possible embodiment, the protection group set by the user 106 may also include only a plurality of data sets that are related to the first service and that are stored by any two of the components. For example, the protection group set by the user 106 may alternative include only a plurality of data sets that are related to the first service and that are stored by the HDFS component and the Hive component.

In addition, the user 106 may further indicate that a moment at which the data backup system 300 backs up the data of the first service is the moment T₀, so that the data backup system 300 may subsequently take a snapshot of and back up the data of the first service at the moment T₀. The information about the protection group and the moment T₀ may form a data backup policy configured by the primary control device 103 for the first service. For a specific implementation process, refer to related descriptions in the foregoing embodiments.

S903: The primary control device 103 sends a third instruction to a backup management apparatus 1011 of the primary cluster 101 before the moment T₀ based on a configured data backup policy, where the third instruction includes the moment T₀ and the information about the protection group.

It should be understood that before the moment T₀, the primary control device 103 generates the third instruction and sends the third instruction to the primary cluster 101, so that the primary cluster 101 may perform snapshot processing on service data at an upcoming moment T₀.

S904: After receiving the third instruction, the backup management apparatus 1011 creates a plurality of processes, and separately accesses the information about the protection group to instruct an HDFS component, a Hive component, and a SparkSQL component that correspond to a plurality of data sets related to the first service by using the plurality of processes.

S905: The backup management apparatus 1011 takes, at the moment T₀ by using the plurality of processes, snapshots of the plurality of data sets that are related to the first service and that are stored by these components.

In an example implementation, the backup management apparatus 1011 may create a process 1, a process 2, and a process 3. The process 1 may be responsible for accessing the HDFS component, and performing, at the moment T₀, a snapshot on an HDFS directory that is related to the first service (namely, a data set related to the first service) and that is stored by the HDFS component. In addition, data of the first service that is stored by the HDFS component is stored in the HDFS directory in a form of a file. The process 2 may be responsible for accessing the Hive component, and may obtain, from a database (data base, DB) at the moment T₀ through a data extraction command, metadata of service data stored by the Hive component, to take a snapshot, based on the metadata, of an HDFS directory that indicates an actual storage location of the data of the first service. Generally, structured data stored by the Hive component is stored in a corresponding HDFS directory in a format of a file. The process 3 may be responsible for accessing the SparkSQL component, and may obtain, from a database at the moment T₀ through a data extraction command, metadata of service data stored by the SparkSQL component, to take a snapshot, based on the metadata, of an HDFS directory that indicates an actual storage location of the data of the first service. In addition, structured data stored by the SparkSQL component is also stored in a corresponding HDFS directory in a format of a file.

In another embodiment, the backup management apparatus 1011 may also take a snapshot of service data stored by each component, or the like by using at least one executor. An implementation of the executor described in this embodiment is similar to an implementation of the executor in the foregoing embodiments.

S906: After completing taking a snapshot of data, the primary control device 103 delivers a second instruction to the backup management apparatus 1021 of the secondary cluster 102, to instruct the secondary cluster 102 to replicate data corresponding to snapshots that are of the plurality of data sets related to the first service, that are in the primary cluster 101, and that are at the first moment.

In actual application, after completing taking a snapshot of the service data stored by the HDFS component, the Hive component, and the SparkSQL component by using the plurality of processes, the backup management apparatus 1011 in the primary cluster 101 may return a snapshot success notification to the primary control device 103. Therefore, after determining that the snapshot ends, the primary control device 103 indicates, by delivering a second instruction, the secondary cluster 102 to back up the service data on the primary cluster 101 to the secondary cluster 102.

For example, the second instruction may include instruction information of the primary cluster 101 for the snapshot corresponding to the data set that is related to the first service and that is stored by the HDFS component, the Hive component, and the SparkSQL component, so that the backup management apparatus 1021 determines which data sets are to be backed up.

S907: The backup management apparatus 1021 starts a plurality of replication tasks based on the information about the protection group of the first service, where each replication task is used to back up a data set that is related to the first service and that is stored by one component.

S908: The backup management apparatus 1021 performs the plurality of replication tasks through at least one executor, and backs up, to the secondary cluster 102 based on the snapshot that is at the moment T₀ and that is in the primary cluster 101, the data set that is related to the first service and that is stored by the component.

In an example, it is assumed that three executors run on the secondary cluster 102, which are respectively an executor 1, an executor 2, and an executor 3. The executor 1 is configured to perform a replication task 1, and obtain, by accessing the primary cluster 101, a snapshot of a data set (for example, an HDFS directory) that is related to the first service and that is stored by the HDFS component at the moment T₀, so that the data set that is related to the first service and that is stored by the HDFS component may be backed up to a storage area corresponding to the HDFS component in the secondary cluster 102 based on the snapshot. Similarly, the executor 2 is configured to perform a replication task 2, and implement, based on the snapshot that is of the data set related to the first service and that is stored by the Hive component at the moment T₀, the data set that is related to the first service and that is stored by the Hive component to a storage area corresponding to the Hive component in the secondary cluster 102; and the executor 3 is configured to perform a replication task 3, and back up, based on the snapshot that is for the data set related to the first service, that is in the SparkSQL component, and that is at the moment T₀, the data set that is related to the first service and that is stored by the SparkSQL component to a storage area corresponding to the SparkSQL component in the secondary cluster 102.

When the data set of the first service corresponding to the Hive component and the SparkSQL component is backed up to the secondary cluster 102, the metadata of the service data in the secondary cluster 102 may be stored in the database in the secondary cluster 102, so that the data of the first service is subsequently queried in the secondary cluster 102 based on the metadata in the database.

In this case, the service data backed up to the secondary cluster 102 is all the plurality of data sets related to the first service that are stored in the primary cluster 101 at the moment T₀, so that the data of the first service in the secondary cluster 102 is consistent in a time dimension.

S909: The backup management apparatus 1021 takes, through at least one executor, a snapshot of the data that is of the first service and that is backed up to the secondary cluster 102.

After backing up the service data from the primary cluster 101 to the secondary cluster 102, the backup management apparatus 1021 may further take a snapshot of the backed up data of the first service by using the executor. In this case, the snapshot in the secondary cluster 102 is consistent with the service data of the primary cluster 101 at the moment T₀.

It should be noted that in this embodiment, an example in which the secondary cluster 102 actively backs up the service data from the primary cluster 101 is used for description. In actual application, the primary cluster 101 may also actively back up the service data to the secondary cluster 102. For example, the primary control device 103 may send a first instruction to the primary cluster 101, to instruct the primary cluster 101 to back up, to the secondary cluster 102, the data set that is related to the first service and that is stored by the HDFS component, the Hive component, and the SparkSQL component. In this case, after completing taking the snapshot, the primary cluster 101 may back up the data of the first service to the secondary cluster 102 through a corresponding executor based on the snapshot at the moment T₀.

Further, in this embodiment, not only the data of the first service in the primary cluster 101 may be backed up to the secondary cluster 102, but also the user data in the primary cluster 101 may be backed up to the secondary cluster 102. For example, the primary control device 103 may send a fourth instruction to the primary cluster 101, to instruct, based on the fourth instruction, the primary cluster 101 to synchronize the user data to the secondary cluster 102. Alternatively, the primary control device 103 may obtain user data stored in the primary cluster 101 and the secondary cluster 102, and adjust, based on the user data stored in the primary cluster 101, the user data stored in the secondary cluster 102, so that the user data stored in the primary cluster 101 is consistent with the user data stored in the secondary cluster 102. In this way, when the secondary cluster 102 takes over a service on the primary cluster 101, the secondary cluster 102 may provide a corresponding business service for a user based on the user data backed up to the secondary cluster 102, so that operation and maintenance personnel do not need to perform manual configuration on the secondary cluster 102. In this way, not only operation and maintenance costs of the operation and maintenance personnel may be reduced, but also a recovery time objective of the data backup system 300 may be effectively reduced. Therefore, this embodiment may further include the following step S910.

S910: The secondary cluster 102 backs up user data in the primary cluster 101 to the secondary cluster 102; or the primary cluster 101 actively backs up user data to the secondary cluster 102; or the primary control device 103 adjusts, based on user data stored in the primary cluster 101, user data stored in the secondary cluster 102.

For example, the user data in the primary cluster 101 may include, for example, at least one of an identifier of a user (including the user 106) created in the primary cluster 101, an identifier of a tenant, and permission applied for the user.

After the service data in the primary cluster 101 is backed up to the secondary cluster 102, if the primary cluster 101 is faulty, the secondary cluster 102 may take over a service currently running in the primary cluster 101, and continue to provide the reading and writing service of the service data for the user by using the service data that is backed up in advance, to ensure reliability of the data backup system 300 for storing the service data of the user.

It should be noted that for brevity of description, this embodiment focuses on the description of operations performed in step S902 to step S910. For specific implementations of the steps, refer to related descriptions in the foregoing embodiments. Details are not described in this embodiment again. In addition, in this embodiment, the user 106 may access the primary cluster 101 or the secondary cluster 102 through the application server 105. Specifically, before the primary cluster 101 is faulty, the user accesses the primary cluster 101 through the primary client 1051 on the application server 105. After the primary cluster 101 is faulty, the application server 105 may automatically switch a client for accessing the cluster, so that the user accesses the secondary cluster 102 through the secondary client 1052 on the application server 105. For a specific implementation process, refer to related descriptions in the foregoing embodiments, and details are not described herein again.

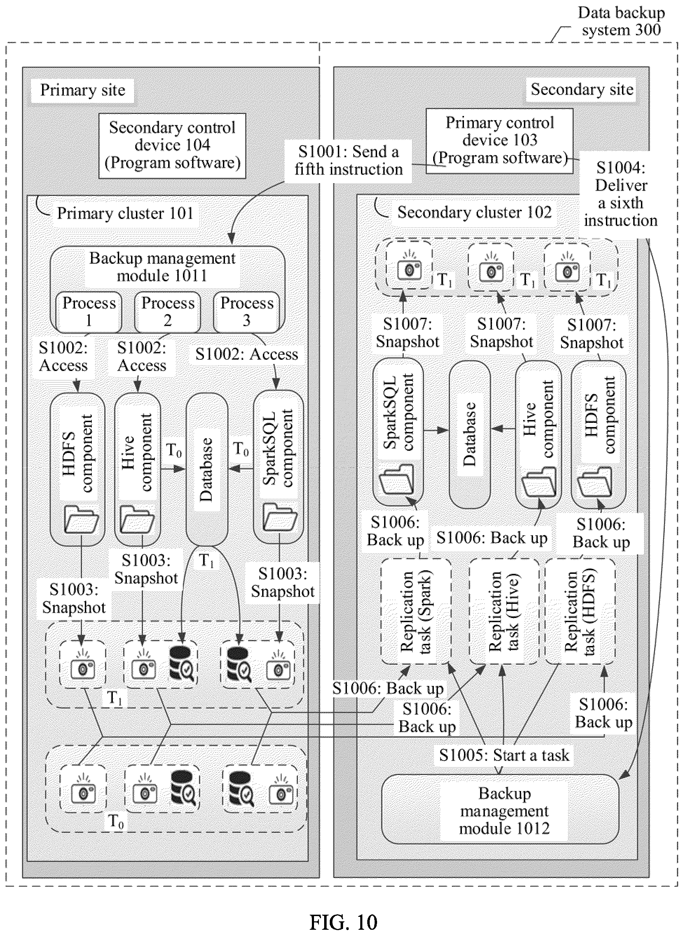

In the foregoing embodiments, an example in which the service data in the primary cluster 101 is backed up at the moment T₀ is used for description. In actual application, data may be periodically backed up between the primary cluster 101 and the secondary cluster 102. For example, the user 106 configures, on a policy configuration interface, a moment of start backup to be the moment T₀, and further configures a backup period between the primary cluster 101 and the secondary cluster 102, so that after the first data backup is performed, and a second data backup process is performed when duration of the backup periodicity elapses. Therefore, the moment T₀ in the foregoing embodiments is also a start moment of the periodic backup. In this case, the secondary cluster 102 may back up all service data in the primary cluster 101 to the secondary cluster 102 each time based on a similar process described in the foregoing embodiments. However, in another embodiment, in a second backup process and a subsequent backup process, the secondary cluster 102 may back up only incremental data in the primary cluster 101 to the secondary cluster 102. The following uses an example in which a second round of data backup is performed between the primary cluster 101 and the secondary cluster 102 for description. The second round of backed up service data is service data (referred to as incremental data below) that is newly added to the primary cluster 101 in a time period from T₀ to T₁ by the primary cluster 101. FIG. 10 is a schematic flowchart of still another data backup method according to an embodiment of this application. The method may specifically include the following steps.

S1001: Before a moment T₁, a primary control device 103 sends a fifth instruction to a backup management apparatus 1011 in a primary cluster 101, where the fifth instruction includes the moment T₁ and protection group information of a first service.

S 1002: After receiving the fifth instruction, the backup management apparatus 1011 creates a plurality of processes (or continues to use a plurality of processes that have been created during a first round of data backup), and accesses, by using the plurality of processes, an HDFS component, a Hive component, and a SparkSQL component that correspond to a data set indicated by information about a protection group.

S1003: The backup management apparatus 1011 takes, at the moment T₁ by using the plurality of processes, a snapshot of a data set that is related to the first service and that is stored by these components.

In an implementation example, a process 1 created by the backup management apparatus 1011 may be responsible for accessing the HDFS component, and taking, at the moment T₁, a snapshot of a data set that is in the HDFS directory related to the first service and that is stored by the HDFS component. Data of the first service stored by the HDFS component is stored in the HDFS directory in a format of a file. The process 2 may be responsible for accessing the Hive component, and may obtain, from a database at the moment T₁ through a data extraction command, metadata that is of the data set related to the first service and that is stored by the Hive component, to take a snapshot, based on the metadata, of the HDFS directory that indicates an actual storage location of the data set. Structured data stored by the Hive component is stored in a corresponding HDFS directory in a format of a file. A process 3 may be responsible for accessing the SparkSQL component, and may obtain, from the database at the moment T₁ through the data extraction command, metadata that is of the data set related to the first service and that is stored by the SparkSQL component, to take a snapshot, based on the metadata, of the HDFS directory that indicates the actual storage location of the data set. Structured data stored by the SparkSQL component is also stored in a corresponding HDFS directory in a format of a file.

S1004: After completing taking a snapshot of data, the primary control device 103 delivers a sixth instruction to a backup management apparatus 1021 in a secondary cluster 102, to instruct the secondary cluster 102 to back up a data set of the first service that is in the primary cluster 101 and that is at the moment T₁ to the secondary cluster 102.

S1005: The backup management apparatus 1021 starts a plurality of replication tasks based on the information about the protection group of the first service, where each replication task is used to back up a data set that is related to the first service and that is stored by one component.

S1006: The backup management apparatus 1021 performs the plurality of replication tasks through at least one executor, and backs up, based on the snapshot at the moment T₀ and the snapshot at the moment T₁ that are in the primary cluster 101, incremental data of the first service stored by each component to the secondary cluster 102.

In an example, it is assumed that three executors run on the secondary cluster 102, which are respectively an executor 1, an executor 2, and an executor 3. The executor 1 is configured to perform a replication task 1, obtain, by accessing the primary cluster 101, a snapshot corresponding to the first service of the HDFS component at the moment T₀ and a snapshot corresponding to the first service of the HDFS component at the moment T₁, so that incremental data of the first service stored by the HDFS component in a time period from T₀ to T₁ may be determined based on snapshots at the moment T₀ and the moment T₁, and the incremental data is backed up to a storage area corresponding to the HDFS component in the secondary cluster 102. Similarly, the executor 2 is configured to perform a replication task 2, determine, based on the snapshots that correspond to the first service of the Hive component and that are at the moment T₀ and the moment T₁, incremental data that is of the first service and that is stored by the Hive component in the time period from T₀ to T₁, and back up the incremental data to a storage area corresponding to the Hive component in the secondary cluster 102; and the executor 3 is configured to perform a replication task 3, determine, based on snapshots that correspond to the first service of the SparkSQL component and that are at the moment T₀ and the moment T₁, incremental data that is of the first service and that is stored by the SparkSQL component in a time period from T₀ to T₁, and back up the incremental data to a storage area corresponding to the SparkSQL component in the secondary cluster 102.

When the incremental data corresponding to the Hive component and the SparkSQL component is backed up to the secondary cluster 102, metadata of the incremental data in the secondary cluster 102 may be stored in the database of the secondary cluster 102, so that the corresponding data of the first service is subsequently queried in the secondary cluster 102 based on the metadata in the database.

In this case, the service data backed up to the secondary cluster 102 is the data of the first service that is at the moment T₀ and that is in the primary cluster 101 and the service data newly added to the first service in the time period from T₀ to T₁, namely, the service data that is at the moment T₁ and that is in the primary cluster 101.

S1007: The backup management apparatus 1021 takes, through at least one executor, a snapshot of the incremental data that is of the first service and that is backed up to the secondary cluster 102.

In this way, each time service data is backed up subsequently, only incremental data of the first service may be transmitted between the primary cluster 101 and the secondary cluster 102, and all service data in the primary cluster 101 may not be transmitted to the secondary cluster 102, so that a transmission amount of service data between the primary cluster 101 and the secondary cluster 102 may be effectively reduced. This improves backup efficiency, and also reduces resource consumption required for backing up the service data.

It should be noted that for brevity of description, this embodiment focuses on the description of operations performed in step S 1001 to step S 1007. For specific implementations of the steps, refer to related descriptions in the foregoing embodiments. Details are not described in this embodiment again.

The foregoing describes the data backup system and the data backup method provided in embodiments of this application with reference to FIG. 1 to FIG. 10. The following describes, with reference to the accompanying drawings, a device that is provided in embodiments of this application and that is configured to perform the foregoing data backup method.

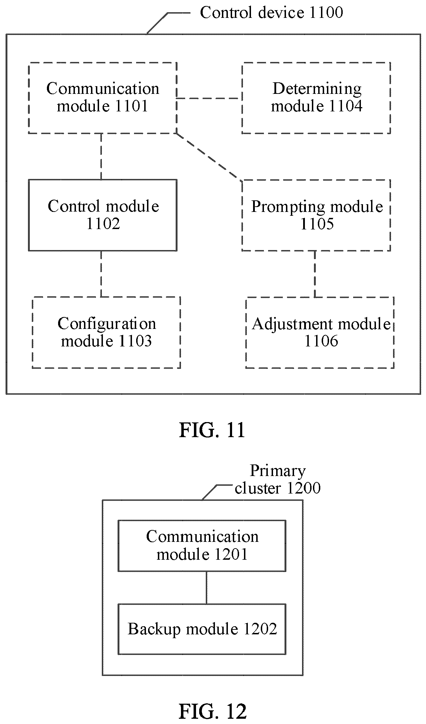

FIG. 11 is a schematic diagram of a structure of a control device according to an embodiment of this application. The control device 1100 shown in FIG. 11 may be configured to implement the data backup method performed by the primary control device 103 in the foregoing embodiments. The control device 1100 in FIG. 11 is located in the data backup system, such as the data backup system 300 shown in FIG. 5. The data backup system further includes a primary cluster and a secondary cluster. The control device 1100 includes:
a control module 1101, configured to control, based on a first data backup policy, the primary cluster or the secondary cluster to back up, to the secondary cluster, a plurality of data sets related to a first service that are in the primary cluster and that are at a first moment, where the first data backup policy includes information about the plurality of data sets related to the first service and the first moment.

In a possible implementation, the control module 1101 is specifically configured to:
send a first instruction to the primary cluster, to instruct the primary cluster to send, to the secondary cluster, data corresponding to snapshots of the plurality of data sets related to the first service that are at the first moment, or send a second instruction to the secondary cluster, to instruct the secondary cluster to replicate, from the primary cluster, data corresponding to snapshots of the plurality of data sets related to the first service that are at the first moment and that are in the primary cluster.

In a possible implementation, the control device 1100 further includes:
a communication module 1102, configured to: before the sending, by control device, a first instruction to the primary cluster or the sending, by the control device, a second instruction to the secondary cluster, send a third instruction to the primary cluster, where the third instruction includes the information about the plurality of data sets related to the first service and the first moment, and the third instruction instructs the primary cluster to obtain the snapshots of the plurality of data sets related to the first service that are at the first moment.

In a possible implementation, the control device 1100 further includes:
a communication module 1102, configured to send, a fourth instruction to the primary cluster, where the fourth instruction instructs the primary cluster to synchronize user data to the secondary cluster; or
the control module 1101, further configured to: obtain, user data stored in the primary cluster and the secondary cluster, and adjust, based on the user data stored in the primary cluster, the user data stored in the secondary cluster.

In a possible implementation, the control device 1100 further includes a configuration module 1103, configured to configure the first data backup policy for the first service based on the information that is about the plurality of data sets related to the first service and that is entered by a user and the first moment.

In a possible implementation, the control device 1100 further includes a configuration module 1103, configured to configure a second data backup policy for a second service, where the second data backup policy includes information about a plurality of data sets related to the second service and a second moment; and
the control module 1101 is further configured to control, based on the second data backup policy, the primary cluster or the secondary cluster to back up, to the secondary cluster, the plurality of data sets related to the second service that are in the primary cluster and that are at the second moment.

In a possible implementation, the plurality of data sets related to the first service include a data set processed or stored by a first component in the primary cluster and a data set processed or stored by a second component in the primary cluster.

In a possible implementation, the control device 1100 includes a primary client and a secondary client, the primary client is configured to detect first status information of the primary cluster, the secondary client is configured to detect second status information of the secondary cluster, and the control device 1100 further includes:
a communication module 1102, configured to obtain the first status information obtained through detection of the primary client and the second status information obtained through detection of the secondary client; and
a determining module 1104, configured to: when the first status information indicates that the primary cluster is a secondary identity or the cluster fails, and the second status information indicates that the secondary cluster is a primary identity, determine that the secondary client is a client accessed by an application.

In a possible implementation, the control device 1100 further includes a prompting module 1105 and an adjustment module 1106, where
the prompting module 1105 is configured to prompt the user with information indicating that the primary cluster is faulty; and
the adjustment module 1106 is configured to adjust an identity of the secondary cluster from the secondary identity to the primary identity in response to an identity adjustment operation of the user for the secondary cluster.

In a possible implementation, the control device 1100 is deployed in an isolated manner from the primary cluster.

In a possible implementation, a same clock source is set in the control device 1100, the primary cluster, and the secondary cluster.

In a possible implementation, the primary cluster and/or the secondary cluster include/includes a cluster constructed based on a hadoop architecture.

The control device 1100 according to embodiments of this application may correspondingly perform the method described in embodiments of this application, and the foregoing and other operations and/or functions of the modules of the control device 1100 are separately used to implement corresponding procedures performed by the primary control device 103 in the foregoing embodiments. For brevity, details are not described herein again.

FIG. 12 is a schematic diagram of a structure of a primary cluster according to an embodiment of this application. The primary cluster 1200 shown in FIG. 12 may be configured to implement the data backup method performed by the primary cluster 101 in the foregoing embodiments. The primary cluster 1200 in FIG. 12 is located in the data backup system, such as the data backup system 300 shown in FIG. 5. The data backup system further includes a secondary cluster and a control device. The primary cluster 1200 includes:
a communication module 1201, configured to obtain an instruction delivered by the control device, where the instruction includes information about a plurality of data sets related to a first service and a first moment; and
a backup module 1202, configured to back up to the secondary cluster based on the instruction, the plurality of data sets related to the first service that are in the primary cluster and that are at the first moment.

In a possible implementation, the backup module 1202 is specifically configured to:
obtain, based on the information about the plurality of data sets related to the first service and the first moment, snapshots of the plurality of data sets related to the first service that are in the primary cluster and that are at the first moment; and
send data corresponding to the snapshots to the secondary cluster based on the snapshots.

In a possible implementation, the backup module 1202 is further configured to synchronize the user data to the secondary cluster.

In a possible implementation, the primary cluster and/or the secondary cluster include/includes a cluster constructed based on a hadoop architecture.

The primary cluster 1200 according to embodiments of this application may correspondingly perform the method described in embodiments of this application, and the foregoing and other operations and/or functions of the modules of the primary cluster 1200 are separately used to implement corresponding procedures performed by the primary cluster 101 in the foregoing embodiments. For brevity, details are not described herein again.

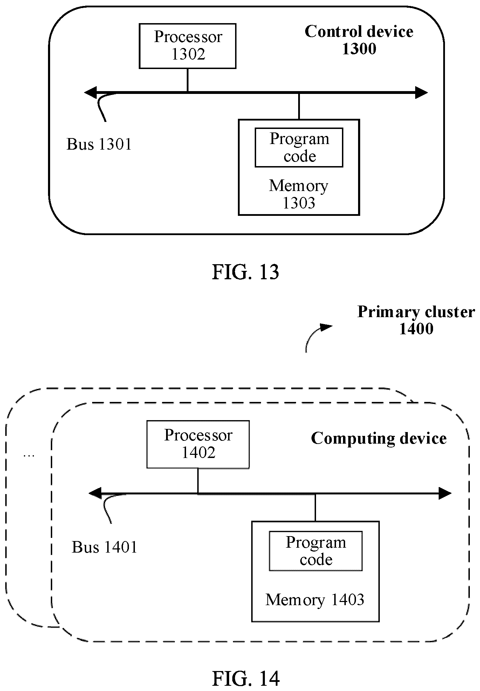

FIG. 13 provides a control device. As shown in FIG. 13, the control device 1300 may be specifically configured to implement a function of the control device 1100 shown in FIG. 11.

The control device 1300 includes a bus 1301, a processor 1302, and a memory 1303. The processor 1302 and the memory 1303 communicate with each other through the bus 1301.

The bus 1301 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 13, but this does not mean that there is only one bus or only one type of bus.

The processor 1302 may be any one or more of processors such as a central processing unit (central processing unit, CPU), a graphics processing unit (graphics processing unit, GPU), a micro processor (micro processor, MP), a digital signal processor (digital signal processor, DSP), and a neural network processing unit (neural network processing unit, NPU).

The memory 1303 may include a volatile memory (volatile memory), for example, a random access memory (random access memory, RAM). The memory 1303 may further include a non-volatile memory (non-volatile memory), for example, a read-only memory (read-only memory, ROM), a flash memory, a mechanical hard disk drive (hard disk drive, HDD), or a solid-state disk (solid-state drive, SSD).

The memory 1303 stores executable program code, and the processor 1302 executes the executable program code to execute the data backup method performed by the primary control device 103 in the foregoing embodiments.

FIG. 14 provides a primary cluster. As shown in FIG. 14, the primary cluster 1400 may be specifically configured to implement a function of the primary cluster 1200 shown in FIG. 12.

The primary cluster 1400 includes at least one processor and at least one memory. The at least one processor and the at least one memory may be located in one or more computing devices. For example, in this embodiment, an example in which at least one memory and at least one memory are located in a plurality of computing devices is used for description. Each computing device may include a bus 1401, a processor 1402, and a memory 1403. The processor 1402 and the memory 1403 communicate with each other through the bus 1401.

The bus 1401 may be a PCI bus, an EISA bus, or the like. The bus may be classified into an address bus, a data bus, a control bus, and the like. For ease of representation, only one bold line is used to represent the bus in FIG. 14, but this does not mean that there is only one bus or only one type of bus.

The processor 1402 may be any one or more of processors such as a CPU, a GPU, an MP, a DSP, and an NPU.

The memory 1403 may include a volatile memory (volatile memory), for example, a RAM. The memory 1403 may further include a non-volatile memory (non-volatile memory), for example, a ROM, a flash memory, an HDD, or an SSD.

The memory 1403 in each computing device may store executable program code. In addition, after the processor 1402 in each computing device executes the executable program code, the primary cluster 1400 performs the data backup method performed by the primary cluster 101 in the foregoing embodiments.

Embodiments of this application further provide a computer-readable storage medium. The computer-readable storage medium may be any usable medium that may be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the data backup method performed by the primary control device 103 or the primary cluster 101.

Embodiments of this application further provide a computer program product. The computer program product includes one or more computer instructions. When the computer instructions are loaded and executed on the computing device, the procedures or functions according to embodiments of this application are all or partially generated.

The computer instructions may be stored in a computer-readable storage medium or may be transmitted from a computer-readable storage medium to another computer-readable storage medium. For example, the computer instructions may be transmitted from a website, computer, or data center to another website, computer, or data center in a wired (for example, a coaxial cable, an optical fiber, or a digital subscriber line (DSL)) or wireless (for example, infrared, radio, or microwave) manner.

The computer program product may be a software installation package. When any method of the foregoing object identification method needs to be used, the computer program product may be downloaded and executed on the computing device.

Descriptions of procedures or structures corresponding to the foregoing accompanying drawings have respective focuses. For a part that is not described in detail in a procedure or structure, refer to related descriptions of other procedures or structures.

## Claims

1. A data backup method, wherein the method is applied to a data backup system, the data backup system comprises a primary cluster, a secondary cluster, and a control device, and the method comprises:
controlling, by the control device based on a first data backup policy, the primary cluster or the secondary cluster to back up, to the secondary cluster, a plurality of data sets related to a first service that are in the primary cluster and that are at a first moment, wherein the first data backup policy comprises information about the plurality of data sets related to the first service and the first moment.

2. The method according to claim 1, wherein the controlling, by the control device based on a first data backup policy, the primary cluster or the secondary cluster to back up, to the secondary cluster, a plurality of data sets related to a first service that are in the primary cluster and that are at a first moment comprises:
sending, by the control device, a first instruction to the primary cluster, to instruct the primary cluster to send, to the secondary cluster, data corresponding to snapshots of the plurality of data sets related to the first service that are at the first moment; or
sending, by the control device, a second instruction to the secondary cluster, to instruct the secondary cluster to replicate, from the primary cluster, data corresponding to snapshots of the plurality of data sets related to the first service that are at the first moment and that are in the primary cluster.

3. The method according to claim 2, wherein before the sending, by the control device, a first instruction to the primary cluster, or the sending, by the control device, a second instruction to the secondary cluster, the method further comprises:
sending, by the control device, a third instruction to the primary cluster, wherein the third instruction comprises the information about the plurality of data sets related to the first service and the first moment, and the third instruction instructs the primary cluster to obtain the snapshots of the plurality of data sets related to the first service that are at the first moment.

4. The method according to any one of claims 1 to 3, wherein the method further comprises:
sending, by the control device, a fourth instruction to the primary cluster, wherein the fourth instruction instructs the primary cluster to synchronize user data to the secondary cluster; or
obtaining, by the control device, user data stored in the primary cluster and the secondary cluster, and adjusting, by the control device based on the user data stored in the primary cluster, the user data stored in the secondary cluster.

5. The method according to any one of claims 1 to 4, wherein the method further comprises:
configuring, by the control device, the first data backup policy for the first service based on the information that is about the plurality of data sets related to the first service and that is entered by a user and the first moment.

6. The method according to any one of claims 1 to 5, wherein the method further comprises:
configuring, by the control device, a second data backup policy for a second service, wherein the second data backup policy comprises information about a plurality of data sets related to the second service and a second moment; and
controlling, by the control device based on the second data backup policy, the primary cluster or the secondary cluster to back up, to the secondary cluster, the plurality of data sets related to the second service that are in the primary cluster and that are at the second moment.

7. The method according to any one of claims 1 to 6, wherein the plurality of data sets related to the first service comprise a data set processed or stored by a first component in the primary cluster and a data set processed or stored by a second component in the primary cluster.

8. The method according to any one of claims 1 to 7, wherein the control device comprises a primary client and a secondary client, the primary client is configured to detect first status information of the primary cluster, the secondary client is configured to detect second status information of the secondary cluster, and the method further comprises:
obtaining, by the control device, the first status information obtained through detection of the primary client and the second status information obtained through detection of the secondary client; and
when the first status information indicates that the primary cluster is a secondary identity or the cluster fails, and the second status information indicates that the secondary cluster is a primary identity, determining, by the control device, that the secondary client is a client accessed by an application.

9. The method according to claim 8, wherein the method further comprises:
prompting, by the control device, the user with information indicating that the primary cluster is faulty; and
adjusting, by the control device, an identity of the secondary cluster from the secondary identity to the primary identity in response to an identity adjustment operation of the user for the secondary cluster.

10. The method according to any one of claims 1 to 9, wherein the control device is deployed in an isolated manner from the primary cluster.

11. The method according to any one of claims 1 to 10, wherein a same clock source is set in the control device, the primary cluster, and the secondary cluster.

12. The method according to any one of claims 1 to 11, wherein the primary cluster and/or the secondary cluster comprise/comprises a cluster constructed based on a hadoop architecture.

13. A data backup method, wherein the method is applied to a data backup system, the data backup system comprises a primary cluster, a secondary cluster, and a control device, and the method comprises:
obtaining, by the primary cluster, an instruction delivered by the control device, wherein the instruction comprises information about a plurality of data sets related to a first service and a first moment; and
backing up, by the primary cluster to the secondary cluster based on the instruction, the plurality of data sets related to the first service that are in the primary cluster and that are at the first moment.

14. The method according to claim 13, wherein the backing up, by the primary cluster to the secondary cluster based on the instruction, the plurality of data sets related to the first service that are in the primary cluster and that are at the first moment specifically comprises:
obtaining, by the primary cluster based on the information about the plurality of data sets related to the first service and the first moment, snapshots of the plurality of data sets related to the first service that are in the primary cluster and that are at the first moment; and
sending, by the primary cluster, data corresponding to the snapshots to the secondary cluster based on the snapshots.

15. The method according to claim 13 or 14, wherein the method further comprises:
synchronizing, by the primary cluster, user data to the secondary cluster.

16. The method according to any one of claims 13 to 15, wherein the primary cluster and/or the secondary cluster comprise/comprises a cluster constructed based on a hadoop architecture.

17. A control device, wherein the control device is located in a data backup system, the data backup system further comprises a primary cluster and a secondary cluster, and the control device comprises:
a control module, configured to control, based on a first data backup policy, the primary cluster or the secondary cluster to back up, to the secondary cluster, a plurality of data sets related to a first service that are in the primary cluster and that are at a first moment, wherein the first data backup policy comprises information about the plurality of data sets related to the first service and the first moment.

18. The control device according to claim 17, wherein the control module is specifically configured to:
send a first instruction to the primary cluster, to instruct the primary cluster to send, to the secondary cluster, data corresponding to snapshots of the plurality of data sets related to the first service that are at the first moment; or
send a second instruction to the secondary cluster, to instruct the secondary cluster to replicate, from the primary cluster, data corresponding to snapshots of the plurality of data sets related to the first service that are at the first moment and that are in the primary cluster.

19. The control device according to claim 18, wherein the control device further comprises:
a communication module, configured to: before the sending, by control device, a first instruction to the primary cluster or the sending, by the control device, a second instruction to the secondary cluster, send a third instruction to the primary cluster, wherein the third instruction comprises the information about the plurality of data sets related to the first service and the first moment, and the third instruction instructs the primary cluster to obtain the snapshots of the plurality of data sets related to the first service that are at the first moment.

20. The control device according to any one of claims 17 to 19, wherein the control device further comprises:
a communication module, configured to send, a fourth instruction to the primary cluster, wherein the fourth instruction instructs the primary cluster to synchronize user data to the secondary cluster; or
the control module, further configured to: obtain, user data stored in the primary cluster and the secondary cluster, and adjust, based on the user data stored in the primary cluster, the user data stored in the secondary cluster.

21. The control device according to claims 17 to 20, wherein the control device further comprises a configuration module, configured to configure the first data backup policy for the first service based on the information that is about the plurality of data sets related to the first service and that is entered by a user and the first moment.

22. The control device according to any one of claims 17 to 21, wherein the control device further comprises a configuration module, configured to configure a second data backup policy for a second service, wherein the second data backup policy comprises information about a plurality of data sets related to the second service and a second moment; and
the control module is further configured to control, based on the second data backup policy, the primary cluster or the secondary cluster to back up, to the secondary cluster, the plurality of data sets related to the second service that are in the primary cluster and that are at the second moment.

23. The control device according to claims 17 to 22, wherein the plurality of data sets related to the first service comprise a data set processed or stored by a first component in the primary cluster and a data set processed or stored by a second component in the primary cluster.

24. The control device according to any one of claims 17 to 23, wherein the control device comprises a primary client and a secondary client, the primary client is configured to detect first status information of the primary cluster, the secondary client is configured to detect second status information of the secondary cluster, and the control device further comprises:
a communication module, configured to obtain the first status information obtained through detection of the primary client and the second status information obtained through detection of the secondary client; and
a determining module, configured to: when the first status information indicates that the primary cluster is a secondary identity or the cluster fails, and the second status information indicates that the secondary cluster is a primary identity, determine that the secondary client is a client accessed by an application.

25. The control device according to claim 24, wherein the control device further comprises a prompting module and an adjustment module, wherein
the prompting module is configured to prompt the user with information indicating that the primary cluster is faulty; and
the adjustment module is configured to adjust an identity of the secondary cluster from the secondary identity to the primary identity in response to an identity adjustment operation of the user for the secondary cluster.

26. The control device according to any one of claims 17 to 25, wherein the control device is deployed in an isolated manner from the primary cluster.

27. The control device according to any one of claims 17 to 26, wherein a same clock source is set in the control device, the primary cluster, and the secondary cluster.

28. The control device according to any one of claims 17 to 27, wherein the primary cluster and/or the secondary cluster comprise/comprises a cluster constructed based on a hadoop architecture.

29. A data backup system, wherein the data backup system comprises a control device, a primary cluster, and a secondary cluster, wherein
the control device is configured to perform the method according to any one of the method claims 1 to 12;
the primary cluster is configured to perform the method according to any one of the method claims 13 to 16; and
the secondary cluster is configured to obtain and store a data set backed up from the primary cluster.

30. A control device, wherein the computing device comprises a processor and a memory, wherein
the processor is configured to execute instructions stored in the memory, to enable the computing device to perform the method according to any one of claims 1 to 12.

31. A computer-readable storage medium, comprising instructions, wherein when the instructions run on a computing device, the computing device is enabled to perform the method according to any one of claims 1 to 12.

32. A computer program product comprising instructions, wherein when the computer program product runs on a computing device, the computing device is enabled to perform the method according to any one of claims 1 to 12.
